# EUROPEAN PATENT APPLICATION

(11) **EP 4 611 439 A1**
(43) Date of publication of application: **03.09.2025**
(21) Application number: 23887542.1
(22) Date of filing: 01.08.2023
(51) Int. Cl.: H04W 52/02

(54) **COMMUNICATION METHOD AND APPARATUS**

(30) Priority: 10.11.2022 CN 202211407077
(71) Applicant: Huawei Technologies Co., Ltd., Shenzhen, Guangdong 518129 (CN)
(72) Inventor: ZHANG, Yangyang, Shenzhen, Guangdong 518129 (CN); YU, Zheng, Shenzhen, Guangdong 518129 (CN); LIU, Jianghua, Shenzhen, Guangdong 518129 (CN); CHANG, Junren, Shenzhen, Guangdong 518129 (CN); WANG, Rui, Shenzhen, Guangdong 518129 (CN)
(74) Representative: Grünecker Patent- und Rechtsanwälte PartG mbB
(86) International application number: PCT/CN2023/110574
(87) International publication number: WO 2024/098846

(57) **Abstract**

A communication method and apparatus are provided, which relate to the field of communication technologies and can ensure user security and reduce signaling overheads while setting identification information of a terminal device. The method may include: A first terminal device receives first paging information from an access network device, and determines, based on the first paging information, whether identification information of one or more terminal devices includes identification information of the first terminal device, where the first paging information includes the identification information of the one or more terminal devices, and a quantity of bits of identification information of each terminal device in the one or more terminal devices is less than 48.

## Description

This application claims priority to Chinese Patent Application No. 202211407077.1, filed with the China National Intellectual Property Administration on November 10, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, an access network device may configure a discontinuous reception (discontinuous reception, DRX) mechanism for a terminal device. The DRX mechanism may be applied to a radio resource control (radio resource control, RRC) connected state, or may be applied to an RRC idle state and an RRC inactive state.

When the DRX mechanism is applied to the RRC idle state and the RRC inactive state, the access network device or a core network device may send paging information to the terminal device. The paging information may include identification information of a paged terminal device. When receiving the paging information, the terminal device may determine, based on the identification information of the terminal device in the paging information, whether the terminal device is the paged terminal device.

To reduce explicit use of a permanent identifier of the terminal device in a communication process and improve security, a 5th generation mobile communication system globally unique temporary user equipment identity (5th generation globally unique temporary UE identity, 5G-GUTI) may be used as identification information of the terminal device. To reduce air interface signaling overheads and improve air interface efficiency, a shortened form of the 5G-GUTI may be further used, to be specific, a 5G temporary mobile subscriber identity (5G-S-temporary mobile subscriber identity, 5G-S-TMSI) may be used as the identification information of the terminal device and carried in the paging information.

A size of the 5G-S-TMSI is 48 bits, and may represent that a quantity of terminal devices that can be accommodated in a network is 2^48. However, when there are a small quantity of terminal devices waiting to be paged in the network, using the 48-bit 5G-S-TMSI occupies a large quantity of bits. Consequently, signaling overheads are high, and power consumption of the terminal device is high.

In conclusion, how to set the identification information of the terminal device to reduce signaling overheads while ensuring user security becomes an urgent technical problem to be resolved.

### SUMMARY

Embodiments of this application provide a communication method and apparatus, to ensure user security and reduce signaling overheads while setting identification information of a terminal device.

According to a first aspect, an embodiment of this application provides a communication method. The method is applied to a first terminal device, or is applied to a chip or a system on chip in the first terminal device. The method includes: receiving first paging information from an access network device, and determining, based on the first paging information, whether identification information of one or more terminal devices includes identification information of the first terminal device, where the first paging information includes the identification information of the one or more terminal devices, and a quantity of bits of identification information of each terminal device in the one or more terminal devices is less than 48.

Based on the first aspect, because the quantity of bits of the identification information of the terminal device is less than 48, signaling overheads and power consumption of the terminal device can be reduced while user security is ensured. This is conducive to energy saving of the terminal device.

In a possible design, the identification information of each terminal device is less than or equal to 32 bits.

Based on this possible design, because the quantity of bits of the identification information of the terminal device is less than or equal to 32 bits, the signaling overheads and the power consumption of the terminal device can be further reduced. This is conducive to energy saving of the terminal device.

In a possible design, the identification information of the terminal device includes first identification information; the identification information of the terminal device includes second identification information and third identification information; the identification information of the terminal device includes second identification information, fourth identification information, and fifth identification information; or the identification information of the terminal device includes second identification information and first identification information, where the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group includes one or more terminal device subgroups.

Based on this possible design, a plurality of feasible solutions are provided for the identification information of the terminal device.

In a possible design, the first terminal device includes a first receiver and a second receiver; and the first paging information is received through the first receiver; or a first part of bit information of the first paging information is received through the first receiver, and a second part of bit information of the first paging information is received through the second receiver.

In a possible design, power consumption of the first receiver is less than power consumption of the second receiver.

Based on the foregoing two possible designs, the first receiver and the second receiver are disposed in the first terminal device. When receiving the first paging information, the first terminal device may receive the first paging information through only the first receiver with lower power consumption, to reduce receiving power consumption. Alternatively, the first receiver may receive the first paging information through both the first receiver and the second receiver, to achieve a higher energy saving gain.

In a possible design, that the first paging information is received through the first receiver includes: If the identification information of the terminal device includes the first identification information, the first identification information in the first paging information is received through the first receiver. Alternatively, if the identification information of the terminal device includes the second identification information and the third identification information, the second identification information in the first paging information is received through the first receiver; and if the second identification information is the same as second identification information in the identification information of the first terminal device, the third identification information in the first paging information is received through the first receiver. Alternatively, if the identification information of the terminal device includes the second identification information, the fourth identification information, and the fifth identification information, the second identification information in the first paging information is received through the first receiver; if the second identification information is the same as second identification information in the identification information of the first terminal device, the fourth identification information in the first paging information is received through the first receiver; and if the fourth identification information is the same as fourth identification information in the identification information of the first terminal device, the fifth identification information in the first paging information is received through the first receiver. Alternatively, if the identification information of the terminal device includes the second identification information and the first identification information, the second identification information in the first paging information is received through the first receiver; and if the second identification information is the same as second identification information in the identification information of the first terminal device, the first identification information in the first paging information is received through the first receiver.

In a possible design, if the first paging information is received through the first receiver, the method further includes: if the first paging information received through the first receiver includes the identification information of the first terminal device, waking up the second receiver to perform network access.

Based on the foregoing two possible designs, when receiving the first paging information, the first terminal device may receive the first paging information through only the first receiver with the lower power consumption, to reduce the receiving power consumption. In addition, when the first paging information includes a plurality of pieces of identification information, the first receiver may receive a next piece of identification information when received identification information is the same as identification information of the first terminal device, and may not receive the next piece of identification information if the received identification information is different from the identification information of the first terminal device. This lowers a processing latency and reduces receiving power consumption of the first receiver.

In a possible design, that a first part of bit information of the first paging information is received through the first receiver, and a second part of bit information of the first paging information is received through the second receiver includes: if the first part of bit information received through the first receiver is the same as a first part of bit information of the identification information of the first terminal device, the second receiver is woken up to receive the second part of bit information of the first paging information.

In a possible design, the first part of bit information is a first part of bit information of the first identification information, and the second part of bit information is a second part of bit information of the first identification information; the first part of bit information includes the second identification information, and the second part of bit information includes the first identification information; the first part of bit information includes the second identification information, and the second part of bit information includes the third identification information; or the first part of bit information includes the second identification information and a first part of the third identification information, and the second part of bit information includes a second part of the third identification information.

Based on the foregoing two possible designs, when receiving the first paging information, the first terminal device may receive the first paging information through both the first receiver and the second receiver. When the first paging information includes a plurality of pieces of identification information, the first receiver may wake up the second receiver to receive subsequent identification information when received identification information is the same as identification information of the first terminal device, and may not wake up the second receiver when the received identification information is different from the identification information of the first terminal device. This lowers a processing latency and reduces receiving power consumption of the second receiver.

In a possible design, the first paging information is received from the access network device based on a candidate length of the first paging information, where the candidate length is predefined; or first indication information is received from the access network device, and the first indication information indicates the candidate length.

Based on this possible design, the first terminal device can receive the first paging information based on the candidate length, and can ignore first paging information that does not meet the candidate length. This reduces the receiving power consumption of the first terminal device.

In a possible design, the identification information of the first terminal device is predefined; or the identification information of the first terminal device is received from the access network device or a core network device.

In a possible design, before the receiving first paging information from an access network device, the method further includes: sending, to the access network device or the core network device, one or more of the following: second indication information, third indication information, and fourth indication information, where the second indication information indicates a type of first paging information that the first terminal device expects to receive, the third indication information indicates a quantity of bits of first paging information that the first terminal device expects to receive through the first receiver, and the fourth indication information indicates a quantity of bits of first paging information that the first terminal device expects to receive through the second receiver.

Based on this possible design, the first terminal device sends the second indication information, the third indication information, and the fourth indication information to the access network device or the core network device, so that the access network device or the core network device can send the first paging information to the first terminal device based on an expectation of the first terminal device.

In a possible design, before the receiving first paging information from an access network device, the method further includes: receiving first capability information from the access network device, where the first capability information indicates whether the access network device has a low power consumption capability; and sending second capability information to the access network device or the core network device based on the first capability information, where the second capability information indicates one or more of the following: whether the terminal device has a low power consumption capability and whether the terminal device supports entering a low power consumption mode.

Based on this possible design, the first terminal device exchanges capability information with the access network device, so that the access network device can send the first paging information to the first terminal device that supports low power consumption.

In a possible design, first information is sent to the access network device or the core network device, where the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

Based on this possible design, the first terminal device sends the first information to the access network device or the core network device, so that the access network device or the core network device can send the corresponding first paging information to the first terminal device based on an expectation of the first terminal device.

In a possible design, the first information is sent to the access network device or the core network device by including the first information in one or more of the following signaling: registration information, non-access stratum NAS information, uplink control information, hybrid automatic repeat request HARQ feedback information, and a buffer status report; fifth indication information is received from the access network device, and the first information is sent to the access network device or the core network device based on the fifth indication information, where the fifth indication information indicates the first terminal device to report the first information; or if configuration information sent by the access network device to the first terminal device does not meet a configuration requirement of the first terminal device, the first information is sent to the access network device or the core network device.

Based on this possible design, when the first terminal device sends the first information to the access network device or the core network device, a static reporting manner or a dynamic reporting manner may be used. For example, the access network device triggers reporting or the first terminal device actively reports the first information. This is not limited.

In a possible design, before the receiving first paging information from an access network device, the method further includes: receiving sixth indication information from the access network device, where the sixth indication information indicates a cycle in which the first terminal device monitors the first paging information, and the cycle is determined based on one or more of the following information associated with the first terminal device: a paging cycle, a terminal device group, a service type, a communication frequency, communication time, the latency requirement, the power consumption requirement, cell load, network load, a modulation scheme, a coding scheme, a coverage requirement, and a sensitivity requirement.

Based on this possible design, the first terminal device may further determine, based on the sixth indication information sent by the access network device, the cycle in which the first terminal device monitors the first paging information, to facilitate subsequent monitoring on the first paging information based on the cycle.

In a possible design, before the receiving first paging information from an access network device, the method further includes: receiving seventh indication information from the access network device, where the seventh indication information indicates a determining rule of the cycle in which the first terminal device monitors the first paging information; and the determining rule includes: if a discontinuous reception DRX cycle or paging cycle that is specific to the terminal device is configured at a higher layer, determining, based on a smaller value between the DRX cycle or paging cycle and a preset cycle, the cycle in which the first terminal device monitors the first paging information; or the determining rule includes: if a DRX cycle or paging cycle that is specific to the terminal device is configured at a higher layer, determining, based on a larger value between the DRX cycle or paging cycle and a preset cycle, the cycle in which the first terminal device monitors the first paging information; or the determining rule includes: if no DRX cycle or paging cycle that is specific to the terminal device is configured at a higher layer, determining, based on a preset cycle, the cycle in which the first terminal device monitors the first paging information.

Based on this possible design, the first terminal device can further determine, based on the seventh indication information sent by the access network device, the determining rule of the cycle in which the first terminal device monitors the first paging information, and the first terminal device can determine, based on the determining rule, the cycle in which the first terminal device monitors the first paging information.

In a possible design, eighth indication information is received from the access network device, where the eighth indication information indicates a time-frequency resource allocated by the access network device to the first terminal device, and the time-frequency resource is determined based on one or more of the following information associated with the first terminal device: the paging cycle, the terminal device group, the service type, the communication frequency, the communication time, the latency requirement, the power consumption requirement, the cell load, the network load, the modulation scheme, the coding scheme, the coverage requirement, and the sensitivity requirement.

Based on this possible design, the first terminal device may further determine, based on the eighth indication information sent by the access network device, the time-frequency resource allocated by the access network device to the first terminal device, and then communicate with the access network device based on the time-frequency resource.

According to a second aspect, an embodiment of this application provides a communication method. The method is applied to an access network device, or is applied to a chip or a system on chip in the access network device. The method includes: determining first paging information, and sending the first paging information to a first terminal device, where the first paging information includes identification information of one or more terminal devices, and a quantity of bits of identification information of each terminal device in the one or more terminal devices is less than 48.

Based on the second aspect, because the quantity of bits of the identification information of the terminal device is less than 48, signaling overheads and power consumption of the terminal device can be reduced while user security is ensured. This is conducive to energy saving of the terminal device.

In a possible design, the determining first paging information includes: receiving the first paging information from a core network device.

Based on this possible design, the first paging information may be determined by the access network device and sent to the first terminal device, or may be determined by the core network device and sent to the first terminal device through the access network device. This is not limited.

In a possible design, the identification information of the terminal device includes first identification information; the identification information of the terminal device includes second identification information and third identification information; the identification information of the terminal device includes second identification information, fourth identification information, and fifth identification information; or the identification information of the terminal device includes second identification information and first identification information, where the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group includes one or more terminal device subgroups.

Based on this possible design, a plurality of feasible solutions are provided for the identification information of the terminal device.

In a possible design, the identification information of each terminal device is less than or equal to 32 bits.

Based on this possible design, because the quantity of bits of the identification information of the terminal device is less than or equal to 32 bits, the signaling overheads and the power consumption of the terminal device can be further reduced. This is conducive to energy saving of the terminal device.

In a possible design, before the sending the first paging information to a first terminal device, the method further includes: sending first indication information to the first terminal device; or receiving first indication information from the core network device, and sending the first indication information to the first terminal device, where the first indication information indicates a candidate length of the first paging information.

Based on this possible design, the candidate length is indicated to the first terminal device, so that the first terminal device can receive the first paging information based on the candidate length, and can ignore first paging information that does not meet the candidate length. This reduces receiving power consumption of the first terminal device.

In a possible design, identification information of the first terminal device is sent to the first terminal device; or identification information of the first terminal device is received from the core network device, and the identification information of the first terminal device is sent to the first terminal device.

In a possible design, before the sending the first paging information to a first terminal device, the method further includes: receiving, from the first terminal device, one or more of the following: second indication information, third indication information, and fourth indication information, and sending, to the core network device, one or more of the following: the second indication information, the third indication information, and the fourth indication information; or receiving, from the core network device, one or more of the following: the second indication information, the third indication information, and the fourth indication information, where the second indication information indicates a type of first paging information that the first terminal device expects to receive, the third indication information indicates a quantity of bits of first paging information that the first terminal device expects to receive through a first receiver, and the fourth indication information indicates a quantity of bits of first paging information that the first terminal device expects to receive through a second receiver.

Based on this possible design, the access network device or the core network device sends the first paging information to the first terminal device based on an expectation of the first terminal device.

In a possible design, before the sending the first paging information to a first terminal device, the method further includes: sending first capability information, where the first capability information indicates whether the access network device has a low power consumption capability; receiving second capability information from the first terminal device, where the second capability information indicates one or more of the following: whether the terminal device has a low power consumption capability and whether the terminal device supports entering a low power consumption mode; and sending the second capability information to the core network device.

Based on this possible design, the access network device exchanges capability information with the first terminal device, so that the access network device can send the first paging information to the first terminal device that supports low power consumption.

In a possible design, first information is received from the first terminal device, and the first information is sent to the core network device; or first information is received from the core network device, where the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

Based on this possible design, the access network device or the core network device can send the corresponding first paging information to the first terminal device based on an expectation of the first terminal device.

In a possible design, the first information is received from the first terminal device bthrough one or more of the following signaling: registration information, non-access stratum NAS information, uplink control information, hybrid automatic repeat request HARQ feedback information, and a buffer status report; fifth indication information is sent to the first terminal device, and the first information is received from the first terminal device, where the fifth indication information indicates the first terminal device to report the first information; or if configuration information sent to the first terminal device does not meet a configuration requirement of the first terminal device, the first information is received from the first terminal device.

Based on this possible design, when the first terminal device sends the first information to the access network device or the core network device, a static reporting manner or a dynamic reporting manner may be used. For example, the access network device triggers reporting or the first terminal device actively reports the first information. This is not limited.

In a possible design, before the sending the first paging information to a first terminal device, the method further includes: sending sixth indication information to the first terminal device, where the sixth indication information indicates a cycle in which the first terminal device monitors the first paging information, and the cycle is determined based on one or more of the following information associated with the first terminal device: a paging cycle, a terminal device group, a service type, a communication frequency, communication time, the latency requirement, the power consumption requirement, cell load, network load, a modulation scheme, a coding scheme, a coverage requirement, and a sensitivity requirement.

Based on this possible design, the sixth indication information is sent to the first terminal device, so that the first terminal device can determine, based on the sixth indication information sent by the access network device, the cycle in which the first terminal device monitors the first paging information, to facilitate subsequent monitoring on the first paging information based on the cycle.

In a possible design, before the sending the first paging information to a first terminal device, the method further includes: sending seventh indication information to the first terminal device, where the seventh indication information indicates a determining rule of the cycle in which the first terminal device monitors the first paging information; and the determining rule includes: if a discontinuous reception DRX cycle or paging cycle that is specific to the terminal device is configured at a higher layer, determining, based on a smaller value between the DRX cycle or paging cycle and a preset cycle, the cycle in which the first terminal device monitors the first paging information; or the determining rule includes: if a DRX cycle or paging cycle that is specific to the terminal device is configured at a higher layer, determining, based on a larger value between the DRX cycle or paging cycle and a preset cycle, the cycle in which the first terminal device monitors the first paging information; or the determining rule includes: if no DRX cycle or paging cycle that is specific to the terminal device is configured at a higher layer, determining, based on a preset cycle, the cycle in which the first terminal device monitors the first paging information.

Based on this possible design, the seventh indication information is sent to the first terminal device, so that the first terminal device can determine, based on the seventh indication information sent by the access network device, the determining rule of the cycle in which the first terminal device monitors the first paging information, and the first terminal device can determine, based on the determining rule, the cycle in which the first terminal device monitors the first paging information.

In a possible design, eighth indication information is sent to the first terminal device, where the eighth indication information indicates a time-frequency resource allocated to the first terminal device, and the time-frequency resource is determined based on one or more of the following information associated with the first terminal device: the paging cycle, the terminal device group, the service type, the communication frequency, the communication time, the latency requirement, the power consumption requirement, the cell load, the network load, the modulation scheme, the coding scheme, the coverage requirement, and the sensitivity requirement.

Based on this possible design, the eighth indication information is sent to the first terminal device, so that the first terminal device can determine, based on the eighth indication information sent by the access network device, the time-frequency resource allocated by the access network device to the first terminal device, and communicate with the access network device based on the time-frequency resource.

According to a third aspect, an embodiment of this application provides a communication method. The method is applied to a core network device, or is applied to a chip or a system on chip in the core network device. The method includes: determining first paging information, and sending the first paging information to a first terminal device through an access network device, where the first paging information includes identification information of one or more terminal devices, and a quantity of bits of identification information of each terminal device in the one or more terminal devices is less than 48.

Based on the second aspect, because the quantity of bits of the identification information of the terminal device is less than 48, signaling overheads and power consumption of the terminal device can be reduced while user security is ensured. This is conducive to energy saving of the terminal device.

In a possible design, the identification information of the terminal device includes first identification information; the identification information of the terminal device includes second identification information and third identification information; the identification information of the terminal device includes second identification information, fourth identification information, and fifth identification information; or the identification information of the terminal device includes second identification information and first identification information, where the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group includes one or more terminal device subgroups.

Based on this possible design, a plurality of feasible solutions are provided for the identification information of the terminal device.

In a possible design, the identification information of each terminal device is less than or equal to 32 bits.

Based on this possible design, because the quantity of bits of the identification information of the terminal device is less than or equal to 32 bits, the signaling overheads and the power consumption of the terminal device can be further reduced. This is conducive to energy saving of the terminal device.

In a possible design, before the sending the first paging information to a first terminal device through an access network device, the method further includes: sending first indication information to the first terminal device through the access network device, where the first indication information indicates a candidate length of the first paging information.

Based on this possible design, the candidate length is indicated to the first terminal device, so that the first terminal device can receive the first paging information based on the candidate length, and can ignore first paging information that does not meet the candidate length. This reduces receiving power consumption of the first terminal device.

In a possible design, identification information of the first terminal device is sent to the first terminal device through the access network device.

In a possible design, before the sending the first paging information to a first terminal device through an access network device, the method further includes: receiving, from the access network device or the first terminal device, one or more of the following: second indication information, third indication information, and fourth indication information, where the second indication information indicates a type of first paging information that the first terminal device expects to receive, the third indication information indicates a quantity of bits of first paging information that the first terminal device expects to receive through a first receiver, and the fourth indication information indicates a quantity of bits of first paging information that the first terminal device expects to receive through a second receiver.

Based on this possible design, the access network device or the core network device sends the first paging information to the first terminal device based on an expectation of the first terminal device.

**In** a possible design, before the sending the first paging information to a first terminal device through an access network device, the method further includes: receiving second capability information from the access network device or the first terminal device, where the second capability information indicates one or more of the following: whether the terminal device has a low power consumption capability and whether the terminal device supports entering a low power consumption mode.

Based on this possible design, through exchange of capability information with the first terminal device, the access network device can send the first paging information to the first terminal device that supports low power consumption.

**In** a possible design, first information is received from the access network device or the first terminal device, where the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

Based on this possible design, the access network device or the core network device can send the corresponding first paging information to the first terminal device based on an expectation of the first terminal device.

**In** a possible design, the first information is received from the access network device or the first terminal device through one or more of the following signaling: registration information and non-access stratum NAS information.

Based on this possible design, when the first terminal device sends the first information to the access network device or the core network device, a static reporting manner or a dynamic reporting manner may be used. For example, the access network device triggers reporting or the first terminal device actively reports the first information. This is not limited.

According to a fourth aspect, an embodiment of this application provides a communication apparatus. The communication apparatus may be used in the first terminal device in the first aspect or the possible designs of the first aspect, to implement a function performed by the first terminal device. The communication apparatus may be the first terminal device, or may be a chip, a system on chip, or the like of the first terminal device. The communication apparatus may perform, through hardware or through hardware executing corresponding software, the function performed by the first terminal device. The hardware or the software includes one or more modules corresponding to the foregoing function, for example, a transceiver module and a processing module. When the communication apparatus is the first terminal device, the transceiver module may be a radio frequency transceiver component. When the communication apparatus is the chip or the system on chip in the first terminal device, the transceiver module may be a communication interface. The communication interface is connected to a radio frequency transceiver component, to implement information receiving and sending through the radio frequency transceiver component. The transceiver module is configured to receive first paging information from an access network device, and the processing module is configured to determine, based on the first paging information, whether identification information of one or more terminal devices includes identification information of the first terminal device, where the first paging information includes the identification information of the one or more terminal devices, and a quantity of bits of identification information of each terminal device in the one or more terminal devices is less than 48.

In a possible design, the identification information of each terminal device is less than or equal to 32 bits.

In a possible design, the identification information of the terminal device includes first identification information; the identification information of the terminal device includes second identification information and third identification information; the identification information of the terminal device includes second identification information, fourth identification information, and fifth identification information; or the identification information of the terminal device includes second identification information and first identification information, where the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group includes one or more terminal device subgroups.

In a possible design, the first terminal device includes a first receiver and a second receiver; and the transceiver module is specifically configured to receive the first paging information through the first receiver; or the transceiver module is specifically configured to: receive a first part of bit information of the first paging information through the first receiver, and receive a second part of bit information of the first paging information through the second receiver.

In a possible design, power consumption of the first receiver is less than power consumption of the second receiver.

In a possible design, if the identification information of the terminal device includes the first identification information, the transceiver module receives the first identification information in the first paging information through the first receiver. Alternatively, if the identification information of the terminal device includes the second identification information and the third identification information, the transceiver module receives the second identification information in the first paging information through the first receiver; and if the second identification information is the same as second identification information in the identification information of the first terminal device, the transceiver module receives the third identification information in the first paging information through the first receiver. Alternatively, if the identification information of the terminal device includes the second identification information, the fourth identification information, and the fifth identification information, the transceiver module receives the second identification information in the first paging information through the first receiver; if the second identification information is the same as second identification information in the identification information of the first terminal device, the transceiver module receives the fourth identification information in the first paging information through the first receiver; and if the fourth identification information is the same as fourth identification information in the identification information of the first terminal device, the transceiver module receives the fifth identification information in the first paging information through the first receiver. Alternatively, if the identification information of the terminal device includes the second identification information and the first identification information, the transceiver module receives the second identification information in the first paging information through the first receiver; and if the second identification information is the same as second identification information in the identification information of the first terminal device, the transceiver module receives the first identification information in the first paging information through the first receiver.

In a possible design, the processing module is further configured to: if the first paging information received through the first receiver includes the identification information of the first terminal device, wake up the second receiver to perform network access.

In a possible design, the processing module is further configured to: if the first part of bit information received through the first receiver is the same as a first part of bit information of the identification information of the first terminal device, wake up the second receiver to receive the second part of bit information of the first paging information.

In a possible design, the first part of bit information is a first part of bit information of the first identification information, and the second part of bit information is a second part of bit information of the first identification information; the first part of bit information includes the second identification information, and the second part of bit information includes the first identification information; the first part of bit information includes the second identification information, and the second part of bit information includes the third identification information; or the first part of bit information includes the second identification information and a first part of the third identification information, and the second part of bit information includes a second part of the third identification information.

In a possible design, the transceiver module is further configured to receive the first paging information from the access network device based on a candidate length of the first paging information, where the candidate length is predefined; or the transceiver module is further configured to receive first indication information from the access network device, and the first indication information indicates the candidate length.

In a possible design, the identification information of the first terminal device is predefined; or the transceiver module is further configured to receive the identification information of the first terminal device from the access network device or a core network device.

In a possible design, the transceiver module is further configured to send, to the access network device or the core network device, one or more of the following: second indication information, third indication information, and fourth indication information, where the second indication information indicates a type of first paging information that the first terminal device expects to receive, the third indication information indicates a quantity of bits of first paging information that the first terminal device expects to receive through the first receiver, and the fourth indication information indicates a quantity of bits of first paging information that the first terminal device expects to receive through the second receiver.

In a possible design, the transceiver module is further configured to: receive first capability information from the access network device, and send second capability information to the access network device or the core network device based on the first capability information, where the first capability information indicates whether the access network device has a low power consumption capability, and the second capability information indicates one or more of the following: whether the terminal device has a low power consumption capability and whether the terminal device supports entering a low power consumption mode.

In a possible design, the transceiver module is further configured to send first information to the access network device or the core network device, where the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

In a possible design, the transceiver module is further configured to send the first information to the access network device or the core network device by including the first information in one or more of the following signaling: registration information, non-access stratum NAS information, uplink control information, hybrid automatic repeat request HARQ feedback information, and a buffer status report; the transceiver module is further configured to: receive fifth indication information from the access network device, and send the first information to the access network device or the core network device based on the fifth indication information, where the fifth indication information indicates the first terminal device to report the first information; or the transceiver module is further configured to: if the processing module determines that configuration information sent by the access network device to the first terminal device does not meet a configuration requirement of the first terminal device, send the first information to the access network device or the core network device.

In a possible design, the transceiver module is further configured to receive sixth indication information from the access network device, where the sixth indication information indicates a cycle in which the first terminal device monitors the first paging information, and the cycle is determined based on one or more of the following information associated with the first terminal device: a paging cycle, a terminal device group, a service type, a communication frequency, communication time, the latency requirement, the power consumption requirement, cell load, network load, a modulation scheme, a coding scheme, a coverage requirement, and a sensitivity requirement.

In a possible design, the transceiver module is further configured to receive seventh indication information from the access network device, where the seventh indication information indicates a determining rule of the cycle in which the first terminal device monitors the first paging information; and the determining rule includes: if a discontinuous reception DRX cycle or paging cycle that is specific to the terminal device is configured at a higher layer, determining, based on a smaller value between the DRX cycle or paging cycle and a preset cycle, the cycle in which the first terminal device monitors the first paging information; or the determining rule includes: if a DRX cycle or paging cycle that is specific to the terminal device is configured at a higher layer, determining, based on a larger value between the DRX cycle or paging cycle and a preset cycle, the cycle in which the first terminal device monitors the first paging information; or the determining rule includes: if no DRX cycle or paging cycle that is specific to the terminal device is configured at a higher layer, determining, based on a preset cycle, the cycle in which the first terminal device monitors the first paging information.

In a possible design, the transceiver module is further configured to receive eighth indication information from the access network device, where the eighth indication information indicates a time-frequency resource allocated by the access network device to the first terminal device, and the time-frequency resource is determined based on one or more of the following information associated with the first terminal device: the paging cycle, the terminal device group, the service type, the communication frequency, the communication time, the latency requirement, the power consumption requirement, the cell load, the network load, the modulation scheme, the coding scheme, the coverage requirement, and the sensitivity requirement.

It should be noted that the modules in the fourth aspect or the possible designs of the fourth aspect may perform the corresponding functions in the method examples in the first aspect. For details, refer to the detailed descriptions in the method examples. For beneficial effect, refer to the related descriptions in the first aspect. Details are not described herein again.

According to a fifth aspect, an embodiment of this application provides a communication apparatus. The communication apparatus may be used in the access network device in the second aspect or the possible designs of the second aspect, to implement a function performed by the access network device. The communication apparatus may be the access network device, or may be a chip, a system on chip, or the like of the access network device. The communication apparatus may perform, through hardware or through hardware executing corresponding software, the function performed by the access network device. The hardware or the software includes one or more modules corresponding to the foregoing function, for example, a transceiver module and a processing module. When the communication apparatus is the access network device, the transceiver module may be a radio frequency transceiver component. When the communication apparatus is the chip or the system on chip in the access network device, the transceiver module may be a communication interface. The communication interface is connected to a radio frequency transceiver component, to implement information receiving and sending through the radio frequency transceiver component. The processing module is configured to determine first paging information, and the transceiver module is configured to send the first paging information to a first terminal device, where the first paging information includes identification information of one or more terminal devices, and a quantity of bits of identification information of each terminal device in the one or more terminal devices is less than 48.

In a possible design, the transceiver module is further configured to receive the first paging information from a core network device.

In a possible design, the identification information of the terminal device includes first identification information; the identification information of the terminal device includes second identification information and third identification information; the identification information of the terminal device includes second identification information, fourth identification information, and fifth identification information; or the identification information of the terminal device includes second identification information and first identification information, where the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group includes one or more terminal device subgroups.

In a possible design, the identification information of each terminal device is less than or equal to 32 bits.

In a possible design, the transceiver module is further configured to send first indication information to the first terminal device; or the transceiver module is further configured to: receive first indication information from the core network device, and send the first indication information to the first terminal device, where the first indication information indicates a candidate length of the first paging information.

In a possible design, the transceiver module is further configured to send identification information of the first terminal device to the first terminal device; or the transceiver module is further configured to: receive identification information of the first terminal device from the core network device, and send the identification information of the first terminal device to the first terminal device.

In a possible design, the transceiver module is further configured to: receive, from the first terminal device, one or more of the following: second indication information, third indication information, and fourth indication information, and send, to the core network device, one or more of the following: the second indication information, the third indication information, and the fourth indication information; or receive, from the core network device, one or more of the following: the second indication information, the third indication information, and the fourth indication information, where the second indication information indicates a type of first paging information that the first terminal device expects to receive, the third indication information indicates a quantity of bits of first paging information that the first terminal device expects to receive through a first receiver, and the fourth indication information indicates a quantity of bits of first paging information that the first terminal device expects to receive through a second receiver.

In a possible design, the transceiver module is further configured to send first capability information, where the first capability information indicates whether the access network device has a low power consumption capability; the transceiver module is further configured to receive second capability information from the first terminal device, where the second capability information indicates one or more of the following: whether the terminal device has a low power consumption capability and whether the terminal device supports entering a low power consumption mode; and the transceiver module is further configured to send the second capability information to the core network device.

In a possible design, the transceiver module is further configured to: receive first information from the first terminal device, and send the first information to the core network device; or the transceiver module is further configured to receive first information from the core network device, where the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

In a possible design, the transceiver module is further configured to receive the first information from the first terminal device through one or more of the following signaling: registration information, non-access stratum NAS information, uplink control information, hybrid automatic repeat request HARQ feedback information, and a buffer status report; the transceiver module is further configured to: send fifth indication information to the first terminal device, and receive the first information from the first terminal device, where the fifth indication information indicates the first terminal device to report the first information; or the transceiver module is further configured to: if configuration information sent to the first terminal device does not meet a configuration requirement of the first terminal device, receive the first information from the first terminal device.

In a possible design, the transceiver module is further configured to send sixth indication information to the first terminal device, where the sixth indication information indicates a cycle in which the first terminal device monitors the first paging information, and the cycle is determined based on one or more of the following information associated with the first terminal device: a paging cycle, a terminal device group, a service type, a communication frequency, communication time, the latency requirement, the power consumption requirement, cell load, network load, a modulation scheme, a coding scheme, a coverage requirement, and a sensitivity requirement.

In a possible design, the transceiver module is further configured to send seventh indication information to the first terminal device, where the seventh indication information indicates a determining rule of the cycle in which the first terminal device monitors the first paging information; and the determining rule includes: if a discontinuous reception DRX cycle or paging cycle that is specific to the terminal device is configured at a higher layer, determining, based on a smaller value between the DRX cycle or paging cycle and a preset cycle, the cycle in which the first terminal device monitors the first paging information; or the determining rule includes: if a DRX cycle or paging cycle that is specific to the terminal device is configured at a higher layer, determining, based on a larger value between the DRX cycle or paging cycle and a preset cycle, the cycle in which the first terminal device monitors the first paging information; or the determining rule includes: if no DRX cycle or paging cycle that is specific to the terminal device is configured at a higher layer, determining, based on a preset cycle, the cycle in which the first terminal device monitors the first paging information.

In a possible design, the transceiver module is further configured to send eighth indication information to the first terminal device, where the eighth indication information indicates a time-frequency resource allocated to the first terminal device, and the time-frequency resource is determined based on one or more of the following information associated with the first terminal device: the paging cycle, the terminal device group, the service type, the communication frequency, the communication time, the latency requirement, the power consumption requirement, the cell load, the network load, the modulation scheme, the coding scheme, the coverage requirement, and the sensitivity requirement.

It should be noted that the modules in the fifth aspect or the possible designs of the fifth aspect may perform the corresponding functions in the method examples in the second aspect. For details, refer to the detailed descriptions in the method examples. For beneficial effect, refer to the related descriptions in the second aspect. Details are not described herein again.

According to a sixth aspect, an embodiment of this application provides a communication apparatus. The communication apparatus may be used in the core network device in the third aspect or the possible designs of the third aspect, to implement a function performed by the core network device. The communication apparatus may be the core network device, or may be a chip, a system on chip, or the like of the core network device. The communication apparatus may perform, through hardware or through hardware executing corresponding software, the function performed by the core network device. The hardware or the software includes one or more modules corresponding to the foregoing function, for example, a transceiver module and a processing module. When the communication apparatus is the core network device, the transceiver module may be a radio frequency transceiver component. When the communication apparatus is the chip or the system on chip in the core network device, the transceiver module may be a communication interface. The communication interface is connected to a radio frequency transceiver component, to implement information receiving and sending through the radio frequency transceiver component. The processing module is configured to determine first paging information, and the transceiver module is configured to send the first paging information to a first terminal device through an access network device, where the first paging information includes identification information of one or more terminal devices, and a quantity of bits of identification information of each terminal device in the one or more terminal devices is less than 48.

In a possible design, the identification information of the terminal device includes first identification information; the identification information of the terminal device includes second identification information and third identification information; the identification information of the terminal device includes second identification information, fourth identification information, and fifth identification information; or the identification information of the terminal device includes second identification information and first identification information, where the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group includes one or more terminal device subgroups.

In a possible design, the identification information of each terminal device is less than or equal to 32 bits.

In a possible design, the transceiver module is further configured to send first indication information to the first terminal device through the access network device, where the first indication information indicates a candidate length of the first paging information.

In a possible design, the transceiver module is further configured to send identification information of the first terminal device to the first terminal device through the access network device.

In a possible design, the transceiver module is further configured to receive, from the access network device or the first terminal device, one or more of the following: second indication information, third indication information, and fourth indication information, where the second indication information indicates a type of first paging information that the first terminal device expects to receive, the third indication information indicates a quantity of bits of first paging information that the first terminal device expects to receive through a first receiver, and the fourth indication information indicates a quantity of bits of first paging information that the first terminal device expects to receive through a second receiver.

In a possible design, the transceiver module is further configured to receive second capability information from the access network device or the first terminal device, where the second capability information indicates one or more of the following: whether the terminal device has a low power consumption capability and whether the terminal device supports entering a low power consumption mode.

In a possible design, the transceiver module is further configured to receive first information from the access network device or the first terminal device, where the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

In a possible design, the transceiver module is further configured to receive the first information from the access network device or the first terminal device through one or more of the following signaling: registration information and non-access stratum NAS information.

It should be noted that the modules in the sixth aspect or the possible designs of the sixth aspect may perform the corresponding functions in the method examples in the third aspect. For details, refer to the detailed descriptions in the method examples. For beneficial effect, refer to the related descriptions in the third aspect. Details are not described herein again.

According to a seventh aspect, an embodiment of this application provides a communication apparatus. The communication apparatus includes one or more processors. The one or more processors are configured to run a computer program or instructions. When the one or more processors execute the computer instructions or the instructions, the communication apparatus is enabled to perform the communication method according to any one of the first aspect to the third aspect. The communication apparatus may be a first terminal device, an access network device, or a core network device, or may be a chip, a system on chip, or the like in the first terminal device, the access network device, or the core network device.

In a possible design, the communication apparatus further includes one or more memories, the one or more memories are coupled to the one or more processors, and the one or more memories are configured to store the computer program or instructions. In a possible implementation, the memory is located outside the communication apparatus. In another possible implementation, the memory is located inside the communication apparatus. In this embodiment of this application, the processor and the memory may alternatively be integrated into one device. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eighth aspect, an embodiment of this application provides a communication apparatus. The communication apparatus includes an input/output interface and a logic circuit. The input/output interface is configured to input and/or output information. The logic circuit is configured to perform the communication method according to any one of the first aspect to the third aspect, and perform processing based on information and/or generate information.

According to a ninth aspect, an embodiment of this application provides a computer-readable storage medium. The computer-readable storage medium stores computer instructions or a program. When the computer instructions or the program is run on a computer, the communication method according to any one of the first aspect to the third aspect is performed.

According to a tenth aspect, an embodiment of this application provides a computer program product including computer instructions. When the computer program product runs on a computer, the communication method according to any one of the first aspect to the third aspect is performed.

According to an eleventh aspect, an embodiment of this application provides a computer program. When the computer program is run on a computer, the communication method according to any one of the first aspect to the third aspect is performed.

For technical effect brought by any design manner of the seventh aspect to the eleventh aspect, refer to the technical effect brought by any one of the first aspect to the third aspect.

According to a twelfth aspect, a communication method is provided. The communication method may include the communication method according to the first aspect, the communication method according to the second aspect, and the communication method according to the third aspect.

According to a thirteenth aspect, a communication system is provided. The communication system may include the first terminal device according to the fourth aspect, the access network device according to the fifth aspect, and the core network device according to the sixth aspect.

### BRIEF DESCRIPTION OF DRAWINGS

FIG. 1 is a diagram of a DRX mechanism according to an embodiment of this application;
FIG. 2 is a diagram of composition of a 5G-S-TMSI according to an embodiment of this application;
FIG. 3 is a diagram of a communication system according to an embodiment of this application;
FIG. 4 is a diagram of composition of a communication apparatus according to an embodiment of this application;
FIG. 5 is a flowchart of a communication method according to an embodiment of this application;
FIG. 6 is a diagram of identification information of a terminal device according to an embodiment of this application;
FIG. 7 is a flowchart of performing paging configuration on a first terminal device according to an embodiment of this application;
FIG. 8 is a diagram of a communication apparatus according to an embodiment of this application; and
FIG. 9 is a diagram of composition of a communication apparatus according to an embodiment of this application.

### DESCRIPTION OF EMBODIMENTS

Before embodiments of this application are described, technical terms used in embodiments of this application are described.

**5th generation (5th generation, 5G) mobile communication system:** Design and development targets of the 5G mobile communication system are mobile phones and vertical use scenarios. In addition to a latency, reliability, and feasibility, energy efficiency of a terminal device is also critical to 5G. A 5G device may need to be charged weekly or daily, which specifically depends on usage time of a user. Usually, the 5G device consumes dozens of milliwatts in a radio resource control (radio resource control, RRC) idle/inactive state, and consumes hundreds of milliwatts in an RRC connected state. A design of extending a battery life is a necessary condition for improving energy efficiency and user experience.

For a terminal device that does not have continuous power supply, for example, a terminal device that uses a small rechargeable battery or a single-currency battery, energy efficiency is more critical. In the vertical use scenario, for example, a scenario in which sensors and actuators are widely deployed for monitoring, measurement, charging, and the like, usually, batteries of the sensors and the actuators are not rechargeable and are expected to be used for at least a few years. In some internet of things scenarios, for example, scenarios of wearable devices including smart watches, rings, electronic health-related devices, and medical monitoring devices, it is challenging to maintain a battery life of one to two weeks while maintaining performance under a typical battery capacity.

Power consumption of the terminal device may depend on a length of a wake-up cycle configured for the terminal device. For example, in the RRC idle state, the power consumption depends on a configured paging cycle. If the configured paging cycle is longer, the terminal device has longer time to be in a sleep state, to achieve energy saving effect. To meet the foregoing battery life requirement, it is expected to use an extended discontinuous reception (extended discontinuous reception, eDRX) cycle with high use value, and a value of the cycle is large. However, using eDRX to achieve high energy efficiency causes a high latency, which is not suitable for a service that requires both a long battery life and a low latency. For example, in a fire detection and fire extinguishing case, within one to two seconds after a sensor detects a fire, a fire-resistant shutter needs to be closed, and an actuator needs to open a fire sprinkler. Therefore, a long eDRX cycle cannot meet a latency requirement. Clearly, eDRX is not suitable for scenarios with high latency requirements. Therefore, it is particularly important to research a technology that can support an ultra-low power consumption mechanism and achieve an ultra-low latency.

For a discontinuous reception (discontinuous reception, DRX) mechanism, a terminal device needs to periodically wake up once in each DRX cycle. When the terminal device is in a wake-up state, but has no signaling or data service to be transmitted during a wake-up period, the terminal device is in an invalid wake-up state. Power consumption in this period constitutes the majority of overall power consumption of the terminal device. If the terminal device wakes up only when the terminal device needs to transmit a signaling or data service, for example, receive paging information of the terminal device, power consumption of the terminal device can be greatly reduced, and energy saving of the terminal device is implemented. This is also an important means for further improving user experience.

**DRX mechanism:** A terminal device may enable a receiver when the terminal device needs to receive downlink data and signaling, to receive the downlink data and signaling; and disable the receiver in another time period to stop receiving the downlink data and signaling. In this way, the terminal device does not need to continuously monitor a physical downlink control channel (physical downlink control channel, PDCCH), so that power consumption of the terminal device can be reduced to prolong usage time of the terminal device. The DRX mechanism may be applied to an RRC connected state, may be applied to an RRC inactive state, or may be applied to an RRC idle state.

When the DRX mechanism is applied to the RRC connected state, in a DRX operation mode, the terminal device needs to periodically enable the receiver to monitor possible incoming signaling. A time period of enabling the receiver is referred to as on duration time (On Duration Time). Duration of this time period may be set by using a parameter DRX on duration timer (drx-onDurationTimer) configured through RRC signaling.

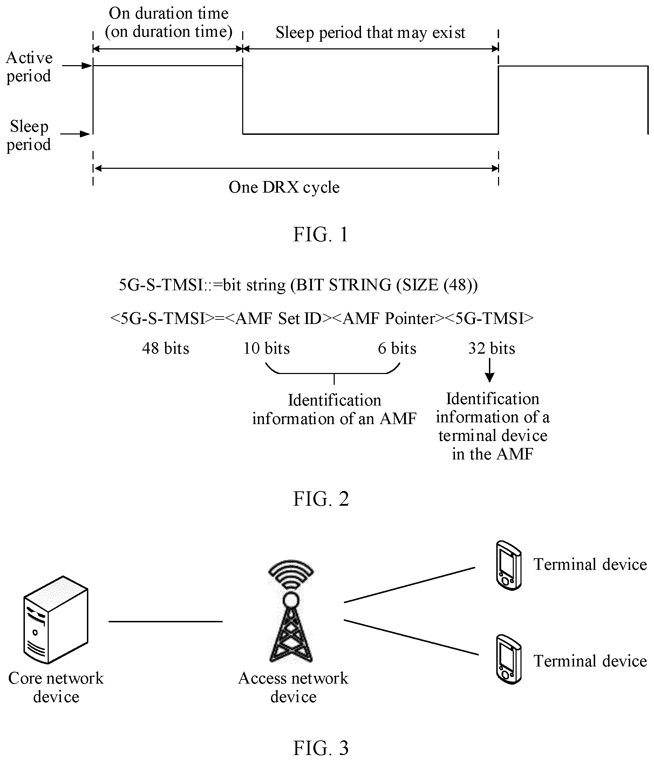

For example, as shown in FIG. 1, a DRX cycle may be divided into an active period and a sleep period based on statuses. A time period in which the terminal device enables the receiver to monitor the PDCCH is referred to as a DRX active period. Each DRX cycle includes one on duration time and a possible sleep period. After the on duration time, it may not necessarily be the sleep period, but it may be an active period. The DRX active period includes the on duration time and a time period in which a DRX-related timer is in a working state.

An access network device may configure the DRX-related timer for the terminal device through RRC signaling. For example, the DRX-related timer may include one or more of the following: a drx-onDurationTimer, a DRX inactive state timer (drx-InactivityTimer), a DRX short cycle timer (drx-ShortCycleTimer), a DRX downlink retransmission timer (drx-RetransmissionTimerDL), a DRX uplink retransmission timer (drx-RetransmissionTimerUL), a DRX downlink hybrid automatic repeat request round trip time timer (drx-HARQ-RTT-TimerDL), and a DRX uplink hybrid automatic repeat request round trip time timer (drx-HARQ-RTT-TimerUL).

For descriptions of related settings, value ranges, and the like of functions, starting, timing, stopping, and timeouts of the timers, refer to the following Table 1:

**Table 1**

| DRX parameter (DRX parameter) | Definition (definition) | Description (description) |
|---|---|---|
| drx-onDurationTimer | Function | The timer is started at the beginning of each DRX cycle. The terminal device monitors the PDCCH in a time period of the timer. |
| | Starting | The timer is started at a start offset of the DRX cycle, that is, at a DRX start offset (drxStartOffset). |
| | Timing | The timing is based on a slot or a millisecond (ms), where a minimum unit is 1 ms or 1/32 ms. |
| | Stopping | •The timer is stopped when the terminal device receives a DRX command medium access control control element (DRX Command MCE). |
| | | •The timer is stopped when the timer expires. |
| | Timeout | When the timer overflows, the terminal device may enter the sleep period. |
| | Value range | 1/32 ms, 2/32 ms, ..., 31/32 ms, 1 ms, 2 ms, 3 ms, 4 ms, 5 ms, 6 ms, 8 ms, 10 ms, 20 ms, 30 ms, 40 ms, 50 ms, 60 ms, 80 ms, 100 ms, 200 ms, 300 ms, 400 ms, 500 ms, 600 ms, 800 ms, 1000 ms, 1200 ms, and 1600 ms. |
| drx-InactivityTimer | Function | The timer is used to determine whether an active period of the terminal device is prolonged due to arrival of new data, and may provide a time reference for the terminal device to use a short DRX cycle. In a time period of the drx-onDurationTimer, if the terminal device learns, from scheduling information on the PDCCH, that uplink or downlink initial transmission needs to be started, the terminal device may start the drx-InactivityTimer. Before the drx-InactivityTimer expires, the terminal device also continuously monitors the PDCCH; and if new initial transmission occurs, restarts the drx-InactivityTimer. In this way, continuous data transmission may cause the drx-InactivityTimer to be repeatedly restarted, and therefore prolong the DRX active period. |
| | Starting | The timer is started or restarted when the terminal device successfully decodes the PDCCH and learns that there is initial transmission data (an uplink grant or downlink data indication) related to the terminal device. |
| | Timing | The timing is based on a quantity of consecutive PDCCH subframes. |
| | Stopping | •The timer is stopped when the terminal device receives a DRX command MCE. |
| | | •The timer is stopped when the timer expires. |
| | | •If a user configures a short DRX cycle and the drx-InactivityTimer expires, the terminal device enters the short DRX cycle; otherwise, the terminal device enters a long DRX cycle. |
| | Timeout | •If the short DRX cycle is configured, the drx-ShortCycleTimer is started or restarted after the timer expires. |
| | | •If the short DRX cycle is not configured, the long DRX cycle continues to be used. |
| | Value range | 0 ms, 1 ms, 2 ms, 3 ms, 4 ms, 5 ms, 6 ms, 8 ms, 10 ms, 20 ms, 30 ms, 40 ms, 50 ms, 60 ms, 80 ms, 100 ms, 200 ms, 300 ms, 500 ms, 750 ms, 1280 ms, 1920 ms, and 2560 ms. |
| drx-ShortCycleTimer | Function | The timer identifies a quantity of consecutive repetition times after a short DRX cycle is entered. |
| | Starting | •If the short DRX cycle is configured and drx-InactivityTimer expires, the timer is started or restarted. |
| | | •When the terminal device receives a DRX command MCE, if the short DRX cycle is configured, the timer is started or restarted. |
| | | •The short cycle is used when the time is started. |
| | Timing | The timing is based on the quantity of repetition times in the short cycle. |
| | Stopping | The timer is stopped when the timer expires. |
| | Timeout | The timing is stopped, and a long DRX cycle is used. |
| | Value range | 2 ms, 3 ms, 4 ms, 5 ms, 6 ms, 7 ms, 8 ms, 10 ms, 14 ms, 16 ms, 20 ms, 30 ms, 32 ms, 35 ms, 40 ms, 64 ms, 80 ms, 128 ms, 160 ms, 256 ms, 320 ms, 512 ms, and 640 ms. |
| drx-RetransmissionTimerDL/drx-RetransmissionTimerUL | Function | The timer defines duration in which the terminal device waits for retransmission in the active period. If the timer expires and the terminal device still receives no downlink/uplink retransmission data, the terminal device no longer receives the retransmission data. |
| | Starting | If the drx-HARQ-RTT-TimerDL/drx-HARQ-RTT-TimerUL expires, and an acknowledgment (ACK) feedback of corresponding downlink/uplink data is not received, the timer is started or restarted. |
| | Timing | The timing is based on a quantity of consecutive PDCCH subframes. |
| | Stopping | If the retransmission data is received before the timer expires, the timer is stopped. |
| | Timeout | The timing is stopped, and the terminal device does not perform other operations. |
| | Value range | 10s, 11s, 12s, 14s, 16s, 18s, 116s, 124s, 133s, 140s, 164s, 180s, 196s, 1112s, 1128s, 1160s, and 1320s. |
| drx-HARQ-RTT-TimerDL/drx-HARQ-RTT-TimerUL | Function | The timer is used to determine when to start the drx-RetransmissionTimerDL/drx-RetransmissionTimerUL. The timer indicates a quantity of subframes that start from a subframe in which a downlink/uplink data packet starts to be transmitted and after which retransmission of the data packet occurs if an error occurs. |
| | Starting | At the beginning of a next subframe in which semi-static downlink/uplink data transmission may exist, or when learning, by monitoring the PDCCH, that a new subframe of downlink/uplink data transmission exists for a HARQ process of the terminal device, the terminal device stops a drx-RetransmissionTimerDL/drx-RetransmissionTimerUL corresponding to the HARQ process and starts the drx-HARQ-RTT-TimerDL/drx-HARQ-RTT-TimerUL. |
| | Timing | The timing is based on a quantity of subframes. |
| | Stopping | The timer is stopped when the timer expires. |
| | Timeout | The timing is stopped, and it is determined whether downlink/uplink data is correctly received. |
| | | •If the data is correctly received, no operation is performed. |
| | | •If the data fails to be received, the timer drx-RetransmissionTimerDL/drx-RetransmissionTimerUL is started for data retransmission. |
| | Value range | Integer (0, ...and 56) |

For example, the access network device may send, to the terminal device, DRX configuration (drx-Config) information that carries a DRX configuration parameter, to configure the DRX mechanism for the terminal device.

In another example, the access network device may alternatively send the DRX configuration parameter to the terminal device by including the DRX configuration parameter in a DRX configuration secondary group (DRX-ConfigSecondaryGroup).

Based on the foregoing descriptions of the DRX mechanism, after entering the DRX operation mode, the terminal device does not necessarily enter a DRX cycle immediately. The terminal device immediately starts the drx-onDurationTimer only when some conditions are met, to enter a DRX cycle. DRX cycles may be classified into a long DRX cycle and a short DRX cycle based on types. The long DRX cycle is used as an example. The access network device configures, through RRC signaling, parameters drx-LongCycle and drxStartOffset of a length of the long DRX cycle; and may determine, based on a system frame (system frame number, SFN) and a subframe (subframe), a moment drxStartOffset for starting the long DRX cycle, where drxStartOffset=[(SFN×10)+subframe number] modulo (longDRX-Cycle). Similarly, for the short DRX cycle, when a condition [(SFN×10)+subframe number] modulo (shortDRX-Cycle)=(drxStartOffset) modulo (shortDRX-Cycle) is met, the short DRX cycle is started.

When the DRX mechanism is applied to the RRC connected state (the DRX mechanism may also be referred to as a C-DRX mechanism), the C-DRX mechanism is mainly used to control PDCCHs scrambled by the following radio network temporary identifiers (radio network temporary identifiers, RNTIs): a semi-persistent scheduling-channel state information-radio network temporary identifier (semi-persistent scheduling-channel state information-RNTI, SPS-CSI-RNTI), a cell radio network temporary identifier (cell-RNTI, C-RNTI), a transmit power control-physical uplink control channel-radio network temporary identifier (transmit power control-physical uplink control channel-RNTI, TPC-PUCCH-RNTI), a transmit power control-physical uplink shared channel-radio network temporary identifier (transmit power control-physical uplink shared channel-RNTI, TPC-PUSCH-RNTI), and a transmit power control-sounding reference signal-radio network temporary identifier (transmit power control-sounding reference signal-RNTI, TPC-SRS-RNTI). In the sleep period, the terminal device does not monitor the PDCCHs scrambled by using the foregoing RNTIs. PDCCHs scrambled by a system information radio network temporary identifier (system information-RNTI, SI-RNTI), a random access radio network temporary identifier (random access-RNTI, RA-RNTI), and a temporary cell radio network temporary identifier (temporary-CRNTI, T-CRNTI) are not constrained by the C-DRX mechanism.

When the DRX mechanism is applied to the RRC idle state (the mechanism may also be referred to as an I-DRX mechanism), or is applied to the RRC inactive state, the DRX mechanism may also be referred to as a paging mechanism. The terminal device may monitor one paging occasion in each DRX cycle. Each paging occasion includes a group of PDCCH monitoring occasions, and also includes a plurality of slots (for example, a subframe or an orthogonal frequency division multiplexing (orthogonal frequency division multiplexing, OFDM) symbol), which are used by the access network device to send paging downlink control information (downlink control information, DCI). A paging frame is a radio frame, and may include one or more paging occasions or a start point of one paging occasion. In a multi-beam operation, the terminal device assumes that same paging information and a same short message service message are repeated in all transmit beams. Therefore, selection of a beam used to receive the paging information and the short message service message depends on implementation of the terminal device. Paging information initiated by the access network device is the same as paging information initiated by a core network device.

After receiving paging initiated by the access network device, the terminal device may initiate an RRC connection resume procedure. If the terminal device receives, in the RRC inactive state, paging initiated by the core network device, the terminal device transitions to the RRC idle state and notifies a non-access stratum (non-access stratum, NAS).

For example, the paging frame and the paging occasion may be determined according to the following formulas:
A formula for determining a system frame number of the paging frame is (SFN+PF_offset) mod T=(T div N)*(UE_ID mod N).

A formula for determining an index i_s of the paging occasion is i_s=floor(UE_ID/N) mod Ns.

T represents a DRX cycle or paging cycle of the terminal device, N represents a total quantity of paging frames within T, and UE_ID represents identification information (identifier, ID) of the terminal device. Ns represents a quantity of paging occasions in each paging frame, and PF_offset represents an offset during determining of the paging frame.

If eDRX is not configured, but a DRX cycle or paging information cycle (or described as a paging cycle) that is specific to the terminal device is configured at a higher layer, that is, the terminal device reports an expected DRX cycle or paging information cycle, T is determined based on a smaller value between the DRX cycle or paging information cycle that is specific to the terminal device and a default value of T. In the RRC idle state, if no DRX cycle or paging information cycle that is specific to the terminal device is configured at the higher layer, T uses the default value. The default value of T may be a DRX cycle or paging information cycle configured by the access network device through RRC signaling.

If eDRX is not configured, a paging cycle may have the following several candidate values: 32 radio frames, 64 radio frames, 128 radio frames, and 256 radio frames. If eDRX is configured, an eDRX paging cycle may have the following several candidate values: 256 radio frames, 512 radio frames, and 1024 radio frames.

To reduce explicit use of a permanent identifier of the terminal device in a communication process and improve security, a 5G globally unique temporary user equipment identity (5G globally unique temporary UE identity, 5G-GUTI) may be used in a 5G system as the identification information of the terminal device. To reduce air interface signaling overheads and improve air interface efficiency, a shortened form of the 5G-GUTI, that is, a 5G temporary mobile subscriber identity (5G-S-temporary mobile subscriber identity, 5G-S-TMSI) may be further used as the identification information of the terminal device and carried in the paging information.

For example, as shown in FIG. 2, a size of the information element (information element, IE) 5G-S-TMSI may be 48 bits (48 bits), and the 5G-S-TMSI may include the following three parts: an access and mobility management function set identifier (access and mobility management function set ID, AMF Set ID), an AMF pointer (AMF Pointer), and a 5G-TMSI.

The AMF set ID is an AMF set ID that uniquely identifies an AMF set in an AMF area, and occupies 10 bits. The AMF pointer identifies an AMF pointer of one or more AMFs in the AMF set, and occupies six bits. The AMF set ID and the AMF pointer may also be described as identification information of the AMF. The 5G-TMSI identifies a specific terminal device identifier (UE ID) in the AMF, may also be described as identification information of the terminal device in the AMF, and occupies 32 bits.

The size of the 5G-S-TMSI is 48 bits, and may represent that a quantity of terminal devices that can be accommodated in a network is 2^48. However, in some scenarios, use of the 48 bits may be "over-designed". For example, in a scenario with a small quantity of services, there are a small quantity of terminal devices that wait to be served, woken up, or paged in the network. For example, if the quantity of terminal devices is 2^20, only 20 bits are required to distinguish between the terminal devices. If identification information of the terminal device is configured with 20 bits, 28 bits can be saved. In other words, the 48-bit 5G-S-TMSI occupies a large quantity of bits, resulting in high signaling overheads and high power consumption of the terminal device, which are not conducive to energy saving of the terminal device. Therefore, a method for adaptively obtaining the identification information of the terminal device that is carried in the paging information needs to be designed.

In addition, the DRX parameters are configured based on each medium access control (medium access control, MAC) entity. Different types or services of terminal devices cause different requirements for DRX parameters. For example, an internet of things terminal and an enhanced mobile broadband (enhanced mobile broadband, eMBB) terminal have different requirements for a paging wake-up cycle and different requirements for a latency. If a same DRX cycle or paging cycle is used, and the selected DRX cycle or paging cycle is short, for a terminal device with a small use frequency, there are excessive invalid wake-up occasions, which is not conducive to energy saving of the terminal device.

If the terminal device wants to use or change a specific DRX parameter of the terminal device, the terminal device may include an IE of the requested DRX parameter in a registration request message sent to the AMF. A DRX-related parameter included in the registration request message may indicate a DRX parameter that the terminal device expects to be configured, or may be used by the network to indicate a DRX cycle value or a paging cycle value that needs to be used during paging.

For example, four bits may be used to indicate the DRX cycle value used for paging. For example, 0000 may indicate that the DRX cycle value is not specified; 0001 indicates that the DRX cycle value T=32 ms; 0010 indicates that the DRX cycle value T=64 ms; 0011 indicates that the DRX cycle value T=128 ms; and 0100 indicates that the DRX cycle value T=256 ms.

However, when reporting the requested DRX parameter to the core network device, the terminal device supports only a reporting procedure of an expected value of a paging cycle. After a new paging mechanism is introduced, the terminal device needs to report an expected DRX parameter value related to the new paging mechanism, for example, include information related to the new paging mechanism in the registration request message, so that the network and the terminal device reach a consensus on DRX parameter configuration, to save energy of the terminal device. Therefore, a new procedure needs to be designed to adapt to the new paging mechanism.

To resolve the foregoing technical problem that the 48-bit 5G-S-TMSI occupies a large quantity of bits, resulting in high signaling overheads and high power consumption of the terminal device, which are not conducive to energy saving of the terminal device, embodiments of this application provide a communication method. In the method, a first terminal device receives first paging information from an access network device, and determines, based on the first paging information, whether identification information of one or more terminal devices includes identification information of the first terminal device, where the first paging information includes the identification information of the one or more terminal devices, and a quantity of bits of identification information of each terminal device in the one or more terminal devices is less than 48. In embodiments of this application, because the quantity of bits of the identification information of the terminal device is less than 48, signaling overheads and power consumption of the terminal device can be reduced while user security is ensured. This is conducive to energy saving of the terminal device.

The following describes in detail implementations of embodiments of this application with reference to the accompanying drawings in this specification.

The communication method provided in embodiments of this application may be applied to any communication system. The communication system may be a 3rd generation partnership project (3rd generation partnership project, 3GPP) communication system, for example, a long term evolution (long term evolution, LTE) system, or may be a 5G mobile communication system, a new radio (new radio, NR) communication system, or a new radio vehicle to everything (vehicle to everything, NR V2X) system. The communication method may also be applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, an internet of things (internet of things, IoT), and another next generation communication system, for example, a future communication system such as a 6G system. Alternatively, the communication system may be a non-3GPP communication system. This is not limited.

The following uses FIG. 3 as an example to describe a communication system provided in embodiments of this application.

FIG. 3 is a diagram of a communication system according to an embodiment of this application. As shown in FIG. 3, the communication system may include one or more terminal devices, an access network device (or described as a radio access network device), and a core network device. The core network device may include a network element, for example, a mobility management network element.

The terminal device in FIG. 3 may include a first receiver (or described as a secondary receiver) and a second receiver (or described as a primary receiver). The first receiver may be a separate receiver independent of the second receiver.

The first receiver may be configured to receive an ultra-low power monitoring wake-up signal (for example, paging information). The monitoring wake-up signal may trigger enabling of the first receiver. Power consumption of the monitoring wake-up signal may depend on a wake-up signal design and a hardware module of a wake-up receiver used for signal detection and processing.

The second receiver may be configured to perform one or more of the following operations: receiving a wake-up signal (for example, paging information), performing random access, performing radio resource management (radio resource management, RRM) measurement, performing synchronization signal/physical broadcast channel block (synchronization signal/PBCH block, SSB) synchronization, and performing data transmission. The wake-up signal may be used to trigger enabling of the second receiver. Unless the second receiver is enabled, the second receiver can be disabled or set to be in a deep sleep mode.

Optionally, power consumption (or power consumption per unit time) of the first receiver is less than power consumption (or power consumption per unit time) of the second receiver, or complexity of the first receiver is less than complexity of the second receiver. The terminal device can implement a higher energy saving gain by using the first receiver and the second receiver.

Optionally, this design is mainly for a low power (low power, LP) wake-up signal (wake-up signal, WUS)/wake-up receiver (wake-up receiver, WUR), and is used for power-sensitive and small devices, including devices (such as an industrial sensor and a controller) in an internet of things usage scenario and a wearable device. Other usage cases, such as extended reality (extended reality, XR)/smart glasses and smartphones, are not excluded.

In FIG. 3, the terminal device may be located in a cell coverage area of the access network device, and the terminal device may be connected to the access network device in a wireless manner. For example, the terminal device may perform air interface communication with the access network device on an uplink (uplink, UL) or a downlink (downlink, DL). For example, the terminal device may send uplink data to the access network device in an UL direction on a physical uplink shared channel (physical uplink shared channel, PUSCH), and the access network device may send downlink data to the terminal device in a DL direction on a physical downlink shared channel (physical downlink shared channel, PDSCH).

In FIG. 3, the terminal device may also communicate with the core network device through a specific interface. For example, the terminal device may communicate with the mobility management network element in the core network device through an N1 interface.

The terminal device in FIG. 3 may be a device having a wireless transceiver function or a chip or a chip system that can be disposed in the device, may allow a user to access a network, and is a device configured to provide voice and/or data connectivity for the user. The terminal device may be located at a fixed position, or may be mobile. The terminal device may also be referred to as user equipment (user equipment, UE), a subscriber unit (subscriber unit), a terminal (terminal), a mobile station (mobile station, MS), a mobile terminal (mobile terminal, MT), or the like. Specifically, the terminal device in FIG. 3 may be a cellular phone (cellular phone), a smartphone (smartphone), a wireless data card, a mobile phone (mobile phone), a personal digital assistant (personal digital assistant, PDA) computer, a tablet computer or a computer with a wireless transceiver function, a wireless modem (modem), a handheld device (handset), or a laptop computer (laptop computer). Alternatively, the terminal device may be a VR terminal, an AR terminal, a wireless terminal in industrial control, a wireless terminal in self driving, a wireless terminal in telemedicine, a wireless terminal in a smart grid, a wireless terminal in transportation safety, a wireless terminal in a smart city (smart city), a wireless terminal in a smart home (smart home), a machine type communication (machine type communication, MTC) terminal, a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The access network device in FIG. 3 may be any device that is deployed in an access network and that can perform wireless communication with the terminal device, or may be described as an access device through which the terminal device accesses the communication system in a wireless manner, or may be a chip or a chip system that can be disposed in the device, and is mainly configured to implement functions such as a wireless physical control function, resource scheduling and radio resource management, radio access control, and mobility management. The access network device may be further connected to the core network device in a wireless or wired manner. Specifically, the access network device may be a device that supports wired access, or may be a device that supports wireless access. For example, the access network device may be an access network (access network, AN)/radio access network (radio access network, RAN) device, and includes a plurality of AN/RAN nodes. The AN/RAN node may be an access point (access point, AP), a base station (NodeB, NB), a macro base station, a micro base station (or described as a small cell), a relay station, an enhanced base station (enhanced NodeB, eNB), a next-generation eNB (next-generation eNB, ng-eNB), a next-generation base station (next-generation NodeB, gNB), a base station in a 5G communication system, a base station in a future mobile communication system or an access node in a wireless fidelity (wireless fidelity, Wi-Fi) system, a transmission reception point (transmission reception point, TRP), a transmission point (transmission point, TP), a transmission measurement function (transmission measurement function, TMF), a wearable device, a vehicle-mounted device, another access node, or the like. A specific technology and a specific device form that are used by the access network device are not limited in embodiments of this application.

Alternatively, the access network device may be of a central unit (central unit, CU)/distributed unit (distributed unit, DU) architecture. In this case, the access network device may include two network elements: a CU and a DU. Alternatively, the access network device may be of a control plane-user plane (control plane-user plane, CP-UP) architecture. In this case, the access network device may include three network elements: a control plane (CU-CP) of a CU, a user plane (CU-UP) of the CU, and a DU. This is not limited.

Optionally, the access network device and the terminal device may be deployed on land, where the deployment includes indoor or outdoor, and handheld or vehicle-mounted deployment; or may be deployed on water; or may be deployed on an airplane, a balloon, and a satellite in air. Application scenarios of the access network device and the terminal device are not limited in embodiments of this application.

Optionally, embodiments of this application are applicable to downlink signal transmission, uplink signal transmission, and D2D signal transmission. For the downlink signal transmission, a sending device is an access network device, and correspondingly, a receiving device is a terminal device. For the uplink signal transmission, a sending device is a terminal device, and correspondingly, a receiving device is an access network device. For the D2D signal transmission, a sending device is a terminal device, and correspondingly, a receiving device is also a terminal device. A signal transmission direction is not limited in embodiments of this application.

Optionally, communication between the access network device and the terminal device and communication between terminal devices may be performed by using a licensed spectrum, an unlicensed spectrum, or both a licensed spectrum and an unlicensed spectrum. A spectrum below 6 G, a spectrum above 6 G, or both a spectrum below 6 G and a spectrum above 6 G may be used for communication between the access network device and the terminal device and communication between the terminal devices. Spectrum resources used between the access network device and the terminal device are not limited in embodiments of this application.

The core network device in FIG. 3 is mainly responsible for providing a user connection, performing user management, and completing service bearing, and serves as a bearer network to provide an interface to an external network.

Optionally, the core network device and the access network device may be different physical devices that are independent of each other, or functions of the core network device and logical functions of the access network device may be integrated into a same physical device, or some functions of the core network device and some functions of the access network device may be integrated into one physical device, or the core network device and the access network device may be disposed in a chip or a chip system of the foregoing device. This is not limited.

The mobility management network element in the core network device is an access and mobility management function deployed in a wireless core network for the terminal device, and is mainly responsible for services such as access authentication and mobility management of the terminal device, and signaling exchange between functional network elements, for example, managing a registration status of the user, a connection status of the user, user registration and network access, tracking area update, user authentication during cell handover, and key security. The mobility management network element may further provide a session management message transmission channel for the terminal device and a session management network element, and provide authentication and authorization functions during user access; and is an access point between the terminal device and a control plane of the wireless core network.

For example, the communication system is a 5G communication system, and a network element or entity corresponding to the mobility management network element may be an AMF in the 5G communication system.

It should be noted that the terminal device, the access network device, and the core network device in this embodiment of this application each may be one or more chips, or a system on chip (system on chip, SoC), or the like. FIG. 3 is merely an example figure, and a quantity of devices included in FIG. 3 is not limited. In addition, in addition to devices shown in FIG. 3, the communication system may further include another device, for example, may further include a wireless relay device and a wireless backhaul device. Names of the devices and links in FIG. 3 are not limited. In addition to the names shown in FIG. 3, the devices and the links may further have other names. This is not limited.

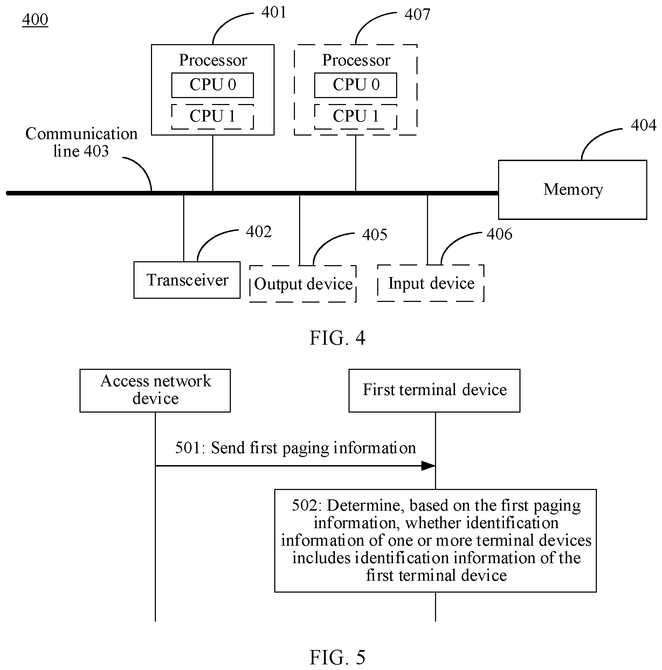

During specific implementation, as shown in FIG. 3, each terminal device, access network device, and core network device may use a composition structure shown in FIG. 4, or include parts shown in FIG. 4. FIG. 4 is a diagram of composition of a communication apparatus 400 according to an embodiment of this application. The communication apparatus 400 may be a terminal device or a chip or a system on chip in the terminal device, or may be an access network device or a chip or a system on chip in the access network device, or may be a core network device or a chip or a system on chip in the core network device. As shown in FIG. 4, the communication apparatus 400 includes a processor 401, a transceiver 402, and a communication line 403.

Further, the communication apparatus 400 may include a memory 404. The processor 401, the memory 404, and the transceiver 402 may be connected through the communication line 403.

The processor 401 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 401 may be another apparatus having a processing function, for example, a circuit, a device, or a software module. This is not limited.

The transceiver 402 is configured to communicate with another device or another communication network. The another communication network may be an Ethernet, a radio access network (radio access network, RAN), a wireless local area network (wireless local area network, WLAN), or the like. The transceiver 402 may be a module, a circuit, a transceiver, or any apparatus that can implement communication.

The communication line 403 is configured to transmit information between the parts included in the communication apparatus 400.

The memory 404 is configured to store instructions. The instructions may be a computer program.

The memory 404 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 404 may exist independently of the processor 401, or may be integrated with the processor 401. The memory 404 may be configured to store instructions, program code, some data, or the like. The memory 404 may be located inside the communication apparatus 400, or may be located outside the communication apparatus 400. This is not limited. The processor 401 is configured to execute the instructions stored in the memory 404, to implement a communication method provided in the following embodiment of this application.

In an example, the processor 401 may include one or more CPUs, for example, a CPU 0 and a CPU 1 in FIG. 4.

In an optional implementation, the communication apparatus 400 includes a plurality of processors. For example, in addition to the processor 401 in FIG. 4, the communication apparatus 400 may further include a processor 407.

In an optional implementation, the communication apparatus 400 further includes an output device 405 and an input device 406. For example, the input device 406 is a keyboard, a mouse, a microphone, a joystick, or another device; and the output device 405 is a display, a speaker (speaker), or another device.

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the parts shown in FIG. 4, the communication apparatus may include more or fewer parts than those shown in the figure, or some parts may be combined, or different part arrangements may be used.

In this embodiment of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 3, with reference to FIG. 5, the communication method provided in embodiments of this application is described. The first terminal device may be any terminal device in the communication system shown in FIG. 3, the access network device may be any access network device in the communication system shown in FIG. 3, and a core network device may be any core network device in the communication system shown in FIG. 3. A terminal device, an access network device, and a core network device in the following embodiment may all have the parts shown in FIG. 4. Processing performed by a single execution body (the terminal device, the access network device, or the core network device) shown in embodiments of this application may alternatively be performed by a plurality of execution bodies. These execution bodies may be logically and/or physically separated. This is not limited.

FIG. 5 is a flowchart of a communication method according to an embodiment of this application. As shown in FIG. 5, the method may include the following steps.

Step 501: An access network device sends first paging information. Correspondingly, a first terminal device receives the first paging information from the access network device.

Step 502: The first terminal device determines, based on the first paging information, whether identification information of the one or more terminal devices includes identification information of the first terminal device.

The first paging information may include the identification information of the one or more terminal devices, and a quantity of bits of identification information of each terminal device in the one or more terminal devices may be less than 48. The one or more terminal devices may also be described as a paged terminal device.

Optionally, the identification information of each terminal device may be 32 bits. For example, the identification information of the terminal device may include the 32-bit identification information of the terminal device in the AMF shown in FIG. 2. Alternatively, the identification information of the terminal device may be less than 32 bits. For example, the identification information of the terminal device may be identification information that is less than 32 bits and that is obtained by processing the 32-bit identification information of the terminal device in the AMF shown in FIG. 2. Alternatively, the identification information of the terminal device may be greater than 32 bits and less than 48 bits. For example, the identification information of the terminal device may include the 16-bit identification information of the AMF shown in FIG. 2, identification information that is less than 32 bits and that is obtained by processing the 32-bit identification information of the terminal device in the AMF shown in FIG. 2, and the like. This is not limited.

The identification information of the terminal device is carried in the first paging information, so that the paged terminal device can establish a communication connection to the access network device based on the first paging information in a random access procedure.

Optionally, the first paging information may also be described as temporary paging information. The temporary paging information may be statically configured (for example, predefined) by the access network device or a core network device, or may be dynamically indicated by the access network device or the core network device, or may be specific to the terminal device. This is not limited.

Optionally, the first paging information may be determined by the access network device and sent to the terminal device, or may be determined by the core network device and sent to the terminal device through the access network device. This is not limited.

In this embodiment of this application, the first terminal device is used as an example to describe a process in which the terminal device receives the first paging information.

In a first possible design, the identification information of the terminal device may include first identification information.

The first identification information may indicate identification information of a mobility management network element associated with the terminal device and identification information of the terminal device in the mobility management network element. Alternatively, the first identification information may indicate identification information of the terminal device in a mobility management network element.

Optionally, when the first identification information indicates the identification information of the mobility management network element associated with the terminal device and the identification information of the terminal device in the mobility management network element, the identification information of the mobility management network element associated with the terminal device may be the 16-bit identification information of the AMF shown in FIG. 2, and the identification information of the terminal device in the mobility management network element may be less than 32 bits.

For example, the identification information of the terminal device in the mobility management network element may be determined based on a temporary identifier (temporary mobile subscriber identity, TMSI).

For example, a value of the identification information of the terminal device in the mobility management network element may be equal to a value of the TMSI mod 1024 (TMSI mod 1024).

For another example, a value of the identification information of the terminal device in the mobility management network element may be equal to a value of the TMSI mod 1000 (TMSI mod 1000).

The TMSI is set to prevent an illegal individual or group from stealing a real international mobile subscriber identity (international mobile subscriber identity, IMSI) of a mobile subscriber or tracking a location of the mobile subscriber by monitoring signaling exchange on a wireless path, and the TMSI is continuously changed. A changing periodicity may be set by a network operator. A higher changing frequency indicates better confidentiality, and may affect a lifespan of a subscriber identity module (subscriber identity module, SIM) card of the subscriber.

In another example, the identification information of the terminal device in the mobility management network element may alternatively be determined based on an international mobile equipment identity (international mobile equipment identity, IMEI).

For example, a value of the identification information of the terminal device in the mobility management network element may be equal to a value of the IMEI mod 1024 (IMEI mod 1024).

For another example, a value of the identification information of the terminal device in the mobility management network element may be equal to a value of the IMEI mod 1000 (IMEI mod 1000).

The IMEI may be a 15-digit "electronic serial number" that corresponds one-to-one to each mobile phone, and is globally unique. After being assembled, each mobile phone is assigned a globally unique group of numbers. The numbers are recorded by a manufacturer from production to delivery.

In still another example, the identification information of the terminal device in the mobility management network element may alternatively be determined based on an IMSI.

For example, a value of the identification information of the terminal device in the mobility management network element may be equal to a value of the IMSI mod 1024 (IMSI mod 1024).

For another example, a value of the identification information of the terminal device in the mobility management network element may be equal to a value of the IMSI mod 1000 (IMSI mod 1000).

The IMSI is an identifier for distinguishing a mobile subscriber, is stored in an SIM card, and may be used to distinguish valid information of the mobile subscriber. A total length of the IMSI does not exceed 15 digits, and digits from 0 to 9 are also used. A mobile country code is a code of a country to which a mobile subscriber belongs, and includes three digits. A mobile country code of China is 460. A mobile network code is a mobile network number, includes a maximum of two digits, and identifies a mobile communication network to which a mobile subscriber belongs. A mobile subscriber identification number is a mobile subscriber identifier, and identifies a mobile subscriber in a specific mobile communication network.

Optionally, when the first identification information indicates the identification information of the terminal device in the mobility management network element, the identification information of the terminal device in the mobility management network element may be less than or equal to 32 bits.

For example, the identification information of the terminal device in the mobility management network element may be the 32-bit identification information of the terminal device in the AMF shown in FIG. 2, or may be determined based on a TMSI (for example, equal to a value of the TMSI mod 1024, or equal to a value of the TMSI mod 1000), or may be determined based on an IMEI (for example, equal to a value of the IMEI mod 1024, or equal to a value of the IMEI mod 1000), or may be determined based on an IMSI (for example, equal to a value of the IMSI mod 1024, or equal to a value of the IMSI mod 1000). This is not limited.

In a second possible design, the identification information of the terminal device may include second identification information and third identification information.

The second identification information may indicate identification information of a terminal device group associated with the terminal device, and the third identification information may indicate identification information of the terminal device in the terminal device group.

The core network device or the access network device may group terminal devices; and determine, based on a grouping result, the identification information of the terminal device group associated with the terminal device and the identification information of the terminal device in the terminal device group.

Optionally, when grouping the terminal devices, the core network device or the access network device may group the terminal devices based on one or more of the following parameters: a paging cycle, a service type, a communication frequency, communication time, a latency requirement, a power consumption requirement, cell load, a modulation scheme, a coding scheme, a coverage requirement, and a sensitivity requirement.

For example, terminal devices with a same paging cycle may be grouped into a same terminal device group, terminal devices with a same service type may be grouped into a same terminal device group, terminal devices whose communication frequencies are in a same frequency range may be grouped into a same terminal device group, terminal devices whose communication time is in a same time range may be grouped into a same terminal device group, terminal devices whose latency requirements are in a same latency range may be grouped into a same terminal device group, terminal devices whose power consumption requirements are in a same power consumption range may be grouped into a same terminal device group, terminal devices in cells whose cell load is in a same load range may be grouped into a same terminal device group, terminal devices with a same modulation scheme may be grouped into a same terminal device group, terminal devices with a same coding scheme may be grouped into a same terminal device group, terminal devices whose coverage requirements are in a same coverage range may be grouped into a same terminal device group, or terminal devices whose sensitivity requirements are in a same sensitivity range may be grouped into a same terminal device group.

Optionally, for different terminal device groups, identification information of terminal devices in the terminal device groups may be the same or may be different. This is not limited.

For example, the identification information of the terminal device group associated with the terminal device occupies two bits, and the identification information of the terminal device in the terminal device group occupies two bits. It is assumed that a terminal device group 1 includes a terminal device 1 and a terminal device 2, and a terminal device group 2 includes a terminal device 3 and a terminal device 4. In this case, identification information of the terminal device 1 to the terminal device 4 may be sequentially 0000, 0001, 0110, and 0111. For the first two bits, 00 represents the terminal device group 1, and 01 represents the terminal device group 2. For the last two bits, 00 represents the terminal device 1, 01 represents the terminal device 2, 10 represents the terminal device 3, and 11 represents the terminal device 4. Alternatively, identification information of the terminal device 1 to the terminal device 4 may be sequentially 0000, 0001, 0100, and 0101. For the first two bits, 00 represents the terminal device group 1; and when the first two bits are 00, for the last two bits, 00 represents the terminal device 1, and 01 represents the terminal device 2. For the first two bits, 01 represents the terminal device group 2; and when the first two bits are 01, for the last two bits, 00 represents the terminal device 3, and 01 represents the terminal device 4.

In a third possible design, the identification information of the terminal device may include second identification information, fourth identification information, and fifth identification information.

The second identification information may indicate identification information of a terminal device group associated with the terminal device, the fourth identification information may indicate identification information of a terminal device subgroup associated with the terminal device, the fifth identification information may indicate identification information of the terminal device in the terminal device subgroup, and one terminal device group may include one or more terminal device subgroups.

For descriptions of the terminal device group, refer to related descriptions of the terminal device group in the second possible design. Details are not described.

Optionally, when grouping terminal devices, the core network device or the access network device may determine, based on one or more of the following parameters, the terminal device group associated with the terminal device and/or the terminal device subgroup associated with the terminal device: a paging cycle, a service type, a communication frequency, communication time, a latency requirement, a power consumption requirement, cell load, a modulation scheme, a coding scheme, a coverage requirement, and a sensitivity requirement.

For different terminal device groups, identification information of terminal device subgroups may be the same or may be different. For different terminal device subgroups, identification information of terminal devices in the terminal device subgroups may be the same or may be different. This is not limited.

In a fourth possible design, the identification information of the terminal device may include second identification information and first identification information.

The second identification information may indicate identification information of a terminal device group associated with the terminal device, and the first identification information may indicate identification information of a mobility management network element associated with the terminal device and identification information of the terminal device in the mobility management network element, or the first identification information may indicate identification information of the terminal device in a mobility management network element.

For descriptions of the first identification information, refer to related descriptions of the first identification information in the first possible design. For descriptions of the second identification information, refer to related descriptions of the second identification information in the second possible design. Details are not described.

Based on the foregoing four possible designs, the first terminal device may include a first receiver and a second receiver. When receiving the first paging information, the first terminal device may receive the first paging information through the first receiver, or may receive the first paging information through the first receiver and the second receiver.

When receiving the first paging information through the first receiver and the second receiver, the first terminal device may receive a first part of bit information of the first paging information through the first receiver, and receive a second part of bit information of the first paging information through the second receiver.

For descriptions of the first receiver and the second receiver, refer to related descriptions of the terminal device in FIG. 3. Details are not described.

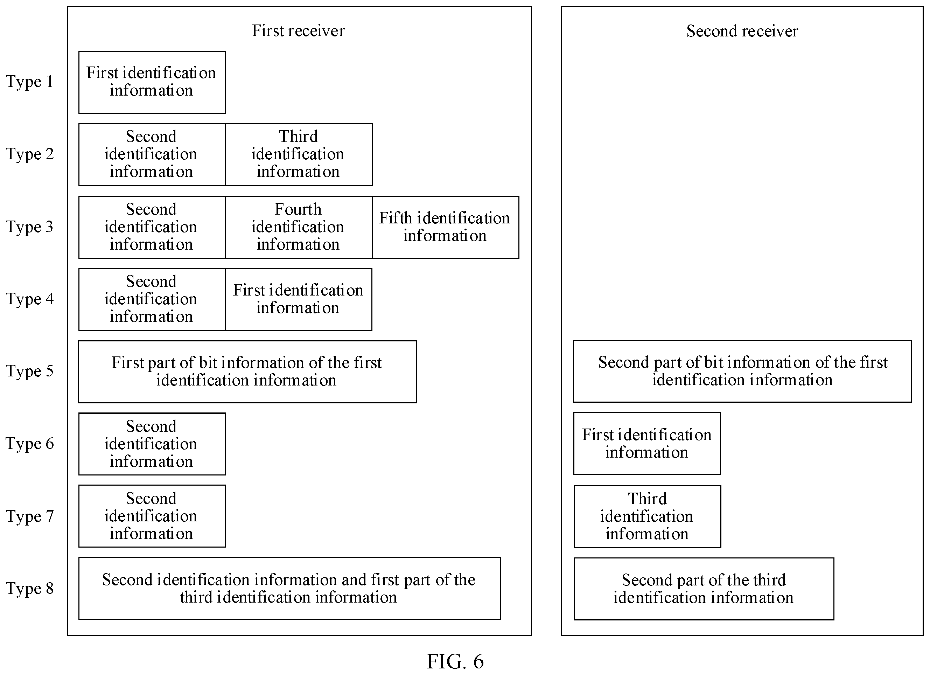

In a first example, as shown in a type 1 in FIG. 6, the identification information of the terminal device includes the first identification information, and the first terminal device may receive the first identification information in the first paging information through the first receiver.

The first receiver of the first terminal device may compare the received first identification information with the identification information of the first terminal device. If the received first identification information is the same as the identification information of the first terminal device, it may be determined that the first paging information includes the identification information of the first terminal device, and the first terminal device may establish a communication connection to the access network device based on the first paging information. If the first identification information received through the first receiver does not include the identification information of the first terminal device, the first terminal device may not need to respond to the first paging information.

Optionally, if the first paging information received through the first receiver includes the identification information of the first terminal device, the first terminal device may wake up the second receiver to perform network access. For example, the second receiver may perform network access based on a random access procedure.

Optionally, if the first receiver of the first terminal device does not detect, within preset duration, first paging information including the identification information of the first terminal device, the first terminal device may wake up the second receiver when the preset duration expires, and receive second paging information through the second receiver.

The second paging information may include the identification information of the terminal device shown in FIG. 2.

In a second example, as shown in a type 2 in FIG. 6, the identification information of the terminal device includes the second identification information and the third identification information, and the first terminal device may receive the second identification information and the third identification information in the first paging information through the first receiver.

Optionally, the first terminal device may receive the second identification information in the first paging information through the first receiver. If the second identification information is different from second identification information in the identification information of the first terminal device, the first terminal device may not need to continue to receive the third identification information in the first paging information through the first receiver. This lowers a processing latency and reduces receiving power consumption of the first receiver. If the second identification information is the same as the second identification information in the identification information of the first terminal device, the first terminal device may continue to receive the third identification information in the first paging information through the first receiver. If the third identification information received through the first receiver is the same as third identification information in the identification information of the first terminal device, it may be determined that the first paging information includes the identification information of the first terminal device, and the first terminal device may establish a communication connection to the access network device based on the first paging information. If the third identification information received through the first receiver is different from the third identification information in the identification information of the first terminal device, the first terminal device may not need to respond to the first paging information.

Alternatively, after receiving the second identification information and the third identification information in the first paging information through the first receiver, the first terminal device may compare the received second identification information with second identification information in the identification information of the first terminal device. If the received second identification information is different from the second identification information in the identification information of the first terminal device, the first terminal device may not need to continue to compare the received third identification information with third identification information in the identification information of the first terminal device. This lowers a processing latency. If the received second identification information is the same as the second identification information in the identification information of the first terminal device, the first terminal device may continue to compare the received third identification information with the third identification information in the identification information of the first terminal device. If the received third identification information is the same as the third identification information in the identification information of the first terminal device, it may be determined that the first paging information includes the identification information of the first terminal device, and the first terminal device may establish a communication connection to the access network device based on the first paging information. If the received third identification information is different from the third identification information in the identification information of the first terminal device, the first terminal device may not need to respond to the first paging information.

Alternatively, after receiving the second identification information and the third identification information in the first paging information through the first receiver, the first terminal device may compare the received second identification information and third identification information with second identification information and third identification information in the identification information of the first terminal device. If the second identification information and the third identification information are both the same as those in the identification information of the first terminal device, it may be determined that the first paging information includes the identification information of the first terminal device, and the first terminal device may establish a communication connection to the access network device based on the first paging information. If at least one of the second identification information and the third identification information is different from that in the identification information of the first terminal device, the first terminal device may not need to respond to the first paging information.

Optionally, if the first paging information received through the first receiver includes the identification information of the first terminal device, the first terminal device may wake up the second receiver to perform network access. For example, the second receiver may perform network access based on a random access procedure.

Optionally, if the first receiver of the first terminal device does not detect, within preset duration, first paging information including the identification information of the first terminal device, the first terminal device may wake up the second receiver when the preset duration expires, and receive second paging information through the second receiver.

The second paging information may include the identification information of the terminal device shown in FIG. 2.

In a third example, as shown in a type 3 in FIG. 6, the identification information of the terminal device includes the second identification information, the fourth identification information, and the fifth identification information, and the first terminal device may receive the second identification information, the fourth identification information, and the fifth identification information in the first paging information through the first receiver.

Optionally, the first terminal device may receive the second identification information in the first paging information through the first receiver. If the second identification information is different from second identification information in the identification information of the first terminal device, the first terminal device may not need to continue to receive the fourth identification information in the first paging information through the first receiver. This lowers a processing latency and reduces receiving power consumption of the first receiver. If the second identification information is the same as the second identification information in the identification information of the first terminal device, the first terminal device may continue to receive the fourth identification information in the first paging information through the first receiver. If the fourth identification information is different from fourth identification information in the identification information of the first terminal device, the first terminal device may not need to continue to receive the fifth identification information in the first paging information through the first receiver. This lowers the processing latency and reduces the receiving power consumption of the first receiver. If the fourth identification information is the same as the fourth identification information in the identification information of the first terminal device, the first terminal device may continue to receive the fifth identification information in the first paging information through the first receiver. If the fifth identification information received through the first receiver is the same as fifth identification information in the identification information of the first terminal device, it may be determined that the first paging information includes the identification information of the first terminal device, and the first terminal device may establish a communication connection to the access network device based on the first paging information. If the fifth identification information received through the first receiver is different from the fifth identification information in the identification information of the first terminal device, the first terminal device may not need to respond to the first paging information.

Alternatively, after receiving the second identification information, the fourth identification information, and the fifth identification information in the first paging information through the first receiver, the first terminal device may compare the received second identification information with second identification information in the identification information of the first terminal device. If the received second identification information is different from the second identification information in the identification information of the first terminal device, the first terminal device may not need to continue to compare the received fourth identification information with fourth identification information in the identification information of the first terminal device. This lowers a processing latency. If the received second identification information is the same as the second identification information in the identification information of the first terminal device, the first terminal device may continue to compare the received fourth identification information with the fourth identification information in the identification information of the first terminal device. If the received fourth identification information is different from the fourth identification information in the identification information of the first terminal device, the first terminal device may not need to continue to compare the received fifth identification information with fifth identification information in the identification information of the first terminal device. This lowers the processing latency. If the received fourth identification information is the same as the fourth identification information in the identification information of the first terminal device, the first terminal device may continue to compare the received fifth identification information with the fifth identification information in the identification information of the first terminal device. If the received fifth identification information is the same as the fifth identification information in the identification information of the first terminal device, it may be determined that the first paging information includes the identification information of the first terminal device, and the first terminal device may establish a communication connection to the access network device based on the first paging information. If the received fifth identification information is different from the fifth identification information in the identification information of the first terminal device, the first terminal device may not need to respond to the first paging information.

Alternatively, after receiving the second identification information, the fourth identification information, and the fifth identification information in the first paging information through the first receiver, the first terminal device may compare the received second identification information, fourth identification information, and fifth identification information with second identification information, fourth identification information, and fifth identification information in the identification information of the first terminal device. If the second identification information, the fourth identification information, and the fifth identification information are all the same as those in the identification information of the first terminal device, it may be determined that the first paging information includes the identification information of the first terminal device, and the first terminal device may establish a communication connection to the access network device based on the first paging information. If at least one of the second identification information, the fourth identification information, and the fifth identification information is different from that in the identification information of the first terminal device, the first terminal device may not need to respond to the first paging information.

Optionally, if the first paging information received through the first receiver includes the identification information of the first terminal device, the first terminal device may wake up the second receiver to perform network access. For example, the second receiver may perform network access based on a random access procedure.

Optionally, if the first receiver of the first terminal device does not detect, within preset duration, first paging information including the identification information of the first terminal device, the first terminal device may wake up the second receiver when the preset duration expires, and receive second paging information through the second receiver.

The second paging information may include the identification information of the terminal device shown in FIG. 2.

In a fourth example, as shown in a type 4 in FIG. 6, the identification information of the terminal device includes the second identification information and the first identification information, and the first terminal device may receive the second identification information and the first identification information in the first paging information through the first receiver.

Optionally, the first terminal device may receive the second identification information in the first paging information through the first receiver. If the second identification information is different from second identification information in the identification information of the first terminal device, the first terminal device may not need to continue to receive the first identification information in the first paging information through the first receiver. This lowers a processing latency and reduces receiving power consumption of the first receiver. If the second identification information is the same as the second identification information in the identification information of the first terminal device, the first terminal device may continue to receive the first identification information in the first paging information through the first receiver. If the first identification information received through the first receiver is the same as first identification information in the identification information of the first terminal device, it may be determined that the first paging information includes the identification information of the first terminal device, and the first terminal device may establish a communication connection to the access network device based on the first paging information. If the first identification information received through the first receiver is different from the first identification information in the identification information of the first terminal device, the first terminal device may not need to respond to the first paging information.

Alternatively, after receiving the second identification information and the first identification information in the first paging information through the first receiver, the first terminal device may compare the received second identification information with second identification information in the identification information of the first terminal device. If the received second identification information is different from the second identification information in the identification information of the first terminal device, the first terminal device may not need to continue to compare the received first identification information with first identification information in the identification information of the first terminal device. This lowers a processing latency. If the received second identification information is the same as the second identification information in the identification information of the first terminal device, the first terminal device may continue to compare the received first identification information with the first identification information in the identification information of the first terminal device. If the received first identification information is the same as the first identification information in the identification information of the first terminal device, it may be determined that the first paging information includes the identification information of the first terminal device, and the first terminal device may establish a communication connection to the access network device based on the first paging information. If the received first identification information is different from the first identification information in the identification information of the first terminal device, the first terminal device may not need to respond to the first paging information.

Alternatively, after receiving the second identification information and the first identification information in the first paging information through the first receiver, the first terminal device may compare the received second identification information and first identification information with second identification information and first identification information in the identification information of the first terminal device. If the second identification information and the first identification information are both the same as those in the identification information of the first terminal device, it may be determined that the first paging information includes the identification information of the first terminal device, and the first terminal device may establish a communication connection to the access network device based on the first paging information. If at least one of the second identification information and the first identification information is different from that in the identification information of the first terminal device, the first terminal device may not need to respond to the first paging information.

Optionally, if the first paging information received through the first receiver includes the identification information of the first terminal device, the first terminal device may wake up the second receiver to perform network access. For example, the second receiver may perform network access based on a random access procedure.

Optionally, if the first receiver of the first terminal device does not detect, within preset duration, first paging information including the identification information of the first terminal device, the first terminal device may wake up the second receiver when the preset duration expires, and receive second paging information through the second receiver.

The second paging information may include the identification information of the terminal device shown in FIG. 2.

In a fifth example, as shown in a type 5 in FIG. 6, the identification information of the terminal device includes the first identification information, and the first terminal device may receive the first part of bit information of the first paging information through the first receiver, and receive the second part of bit information of the first paging information through the second receiver.

The first part of bit information may be a first part of bit information of the first identification information, and the second part of bit information may be a second part of bit information of the first identification information.

Optionally, when receiving the first paging information through the first receiver and the second receiver, the first terminal device may first receive the first part of bit information of the first paging information through the first receiver. If the first part of bit information received through the first receiver is different from a first part of bit information of the identification information of the first terminal device, the first terminal device may not need to wake up the second receiver to receive the second part of bit information of the first paging information. This lowers a processing latency and reduces receiving power consumption of the second receiver. If the first part of bit information received through the first receiver is the same as the first part of bit information of the identification information of the first terminal device, the first terminal device may wake up the second receiver to continue to receive the second part of bit information of the first paging information. If the second part of bit information received through the second receiver is the same as a second part of bit information of the identification information of the first terminal device, it may be determined that the first paging information includes the identification information of the first terminal device, and the first terminal device may establish a communication connection to the access network device based on the first paging information. If the second part of bit information received through the second receiver is different from the second part of bit information of the identification information of the first terminal device, the first terminal device may not need to respond to the first paging information.

Optionally, if the first receiver of the first terminal device does not detect, within preset duration, first paging information including the first part of bit information of the identification information of the first terminal device, the first terminal device may wake up the second receiver when the preset duration expires, and receive second paging information through the second receiver.

The second paging information may include the identification information of the terminal device shown in FIG. 2.

In a sixth example, as shown in a type 6 in FIG. 6, the identification information of the terminal device includes the second identification information and the first identification information, and the first terminal device may receive the first part of bit information of the first paging information through the first receiver, and receive the second part of bit information of the first paging information through the second receiver.

The first part of bit information may be the second identification information, and the second part of bit information may be the first identification information.

Optionally, when receiving the first paging information through the first receiver and the second receiver, the first terminal device may first receive the second identification information in the first paging information through the first receiver. If the second identification information received through the first receiver is different from second identification information in the identification information of the first terminal device, the first terminal device may not need to wake up the second receiver to receive the first identification information in the first paging information. This lowers a processing latency and reduces receiving power consumption of the second receiver. If the second identification information received through the first receiver is the same as the second identification information in the identification information of the first terminal device, the first terminal device may wake up the second receiver to continue to receive the first identification information in the first paging information. If the first identification information received through the second receiver is the same as first identification information in the identification information of the first terminal device, it may be determined that the first paging information includes the identification information of the first terminal device, and the first terminal device may establish a communication connection to the access network device based on the first paging information. If the first identification information received through the second receiver is different from the first identification information in the identification information of the first terminal device, the first terminal device may not need to respond to the first paging information.

Optionally, if the first receiver of the first terminal device does not detect, within preset duration, first paging information including the first identification information in the identification information of the first terminal device, the first terminal device may wake up the second receiver when the preset duration expires, and receive second paging information through the second receiver.

The second paging information may include the identification information of the terminal device shown in FIG. 2.

In a seventh example, as shown in a type 7 in FIG. 6, the identification information of the terminal device includes the second identification information and the third identification information, and the first terminal device may receive the first part of bit information of the first paging information through the first receiver, and receive the second part of bit information of the first paging information through the second receiver.

The first part of bit information may be the second identification information, and the second part of bit information may be the third identification information.

Optionally, when receiving the first paging information through the first receiver and the second receiver, the first terminal device may first receive the second identification information in the first paging information through the first receiver. If the second identification information received through the first receiver is different from second identification information in the identification information of the first terminal device, the first terminal device may not need to wake up the second receiver to receive the third identification information in the first paging information. This lowers a processing latency and reduces receiving power consumption of the second receiver. If the second identification information received through the first receiver is the same as the second identification information in the identification information of the first terminal device, the first terminal device may wake up the second receiver to continue to receive the third identification information in the first paging information. If the third identification information received through the second receiver is the same as third identification information in the identification information of the first terminal device, it may be determined that the first paging information includes the identification information of the first terminal device, and the first terminal device may establish a communication connection to the access network device based on the first paging information. If the third identification information received through the second receiver is different from the third identification information in the identification information of the first terminal device, the first terminal device may not need to respond to the first paging information.

Optionally, if the first receiver of the first terminal device does not detect, within preset duration, first paging information including the third identification information in the identification information of the first terminal device, the first terminal device may wake up the second receiver when the preset duration expires, and receive second paging information through the second receiver.

The second paging information may include the identification information of the terminal device shown in FIG. 2.

In an eighth example, as shown in a type 8 in FIG. 6, the identification information of the terminal device includes the second identification information and the third identification information, and the first terminal device may receive the first part of bit information of the first paging information through the first receiver, and receive the second part of bit information of the first paging information through the second receiver.

The first part of bit information may include the second identification information and a first part of the third identification information, and the second part of bit information may include a second part of the third identification information.

Optionally, when receiving the first paging information through the first receiver and the second receiver, the first terminal device may first receive the second identification information and the first part of the third identification information in the first paging information through the first receiver. If the second identification information and the first part of the third identification information that are received through the first receiver are different from second identification information and a first part of third identification information in the identification information of the first terminal device, the first terminal device may not need to wake up the second receiver to receive the second part of the third identification information in the first paging information. This lowers a processing latency and reduces receiving power consumption of the second receiver. If the second identification information and the first part of the third identification information that are received through the first receiver are the same as the second identification information and the first part of the third identification information in the identification information of the first terminal device, the first terminal device may wake up the second receiver to continue to receive the second part of the third identification information in the first paging information. If the second part of the third identification information received through the second receiver is the same as a second part of the third identification information in the identification information of the first terminal device, it may be determined that the first paging information includes the identification information of the first terminal device, and the first terminal device may establish a communication connection to the access network device based on the first paging information. If the second part of the third identification information received through the second receiver is different from the second part of the third identification information in the identification information of the first terminal device, the first terminal device may not need to respond to the first paging information.

Optionally, if the first receiver of the first terminal device does not detect, within preset duration, first paging information including the second part of the third identification information in the identification information of the first terminal device, the first terminal device may wake up the second receiver when the preset duration expires, and receive second paging information through the second receiver.

The second paging information may include the identification information of the terminal device shown in FIG. 2.

Based on the eight examples shown in FIG. 6, optionally, allocation rules for different types of first paging information are applicable to different application scenarios.

For example, the type 1, the type 2, the type 3, and the type 4 may be applied to a scenario in which a low power consumption requirement is high. The first receiver may independently complete a procedure of receiving the first paging information, and the second receiver does not need to be enabled. Therefore, power consumption is low. In addition, in consideration of a problem of extra power consumption caused by a latency during monitoring of the first paging information, the type 1 may be applied to a scenario in which network load is low, the type 2 and the type 4 may be applied to a scenario in which the network load is moderate, and the type 3 may be applied to a scenario in which the network load is high. It may be understood that the type 3 may be degraded into the type 1, the type 2, or the type 4, and configuration is more flexible.

For another example, the type 5, the type 6, the type 7, and the type 8 may all be used in a scenario in which a low power consumption requirement is low. The first receiver and the second receiver jointly complete a procedure of receiving the first paging information. In addition, in consideration of impact of a channel status condition on an indicator of a false alarm rate, the type 6 and the type 7 are respectively applicable to a scenario in which the channel status condition is poor and a scenario in which the channel status condition is good. The type 5 is a trade-off solution considering power consumption and a latency. The type 8 is a trade-off solution between the type 1 and the type 6.

An essence of the manners of receiving the various types of first paging information shown in FIG. 6 is to find a balance point between a proportion of a part that is of the first paging information and that is received through the first receiver and a proportion of a part that is of the first paging information and that is received through the second receiver.

Optionally, when receiving the first paging information, the first terminal device may receive the first paging information from the access network device based on a candidate length of the first paging information (or described as a candidate quantity of bits occupied by the first paging information).

Optionally, different identification information of the terminal device that is carried in different first paging information may be predefined for the terminal device. In other words, the first paging information may have different candidate lengths, and different identification information of a same terminal device may be predefined for the terminal device based on the different candidate lengths of the first paging information. In other words, there is a correspondence between the candidate length of the first paging information and the identification information of the terminal device.

For example, the candidate quantity of bits occupied by the first paging information may be 10, 13, 15, 17, 20, 25, 30, 32, 40, 45, 48, or the like.

For example, if the candidate quantity of bits occupied by the first paging information is 10, the identification information of the terminal device may include 10 bits. For another example, if the candidate quantity of bits occupied by the first paging information is 32, the identification information of the terminal device may include 32 bits.

Optionally, the candidate length may be predefined, or may be dynamically indicated by the access network device to the first terminal device by using first indication information, or may be dynamically indicated by the core network device to the first terminal device through the access network device by using first indication information. In other words, the first indication information may indicate the candidate length.

For example, it is assumed that candidate lengths of the first paging information are predefined to be 10 bits, 20 bits, and 32 bits. In this case, the terminal device may monitor only first paging information of the three lengths. For another example, the predefined candidate length of the first paging information may alternatively be dynamically indicated by the access network device or the core network device by using the first indication information.

Optionally, the access network device or the core network device may dynamically indicate the first indication information to the terminal device by including the first indication information in one or more of the following information: a system message, downlink control information, and a downlink data channel (that is, the first indication information may be transmitted along with data).

Optionally, based on the foregoing descriptions of the identification information of the first terminal device, the identification information of the first terminal device may be predefined, may be sent by the access network device to the first terminal device, or may be sent by the core network device to the first terminal device through the access network device.

For example, the identification information of the terminal device that is carried in the first paging information and that is allocated by the core network device or the access network device may be dynamically allocated.

The core network device or the access network device may select, based on a current network load status, an appropriate length of the identification information of the terminal device that is carried in the first paging information, and dynamically allocate the identification information of the terminal device through dynamic signaling.

For example, the identification information of the terminal device that is carried in the first paging information may be indicated by using the system message. Alternatively, the identification information of the terminal device that is carried in the first paging information may be indicated by using the downlink control information. Alternatively, the identification information of the terminal device that is carried in the first paging information may be carried in the downlink data channel for indication, in other words, the identification information of the terminal device that is carried in the first paging information may be transmitted along with the data.

For the terminal device, the terminal device may interact with the core network device or the access network device for a plurality of times to obtain the identification information of the terminal device.

For example, before dynamically allocating the first paging information, the core network device may first send the corresponding predefined identification information of the terminal device to the terminal device through the access network device. The predefined identification information of the terminal device may be identification information of the terminal device that is bound to the specific terminal device. In this way, when the core network device or the access network device pages the terminal device, the terminal device may learn, based on the identification information of the terminal device, whether the terminal device is paged in a paging process.

After the core network device or the access network device completes previous interaction with the terminal device, the core network device or the access network device may allocate the identification information of the terminal device in a dynamic allocation manner.

In addition, after the core network device or the access network device performs the foregoing previous information exchange once with the terminal device, an additional acknowledgment information procedure may be performed, to further reduce a false alarm rate, and further implement alignment between the core network device or the access network device and the terminal device.

For example, after receiving the predefined identification information of the terminal device, the terminal device may transparently transmit acknowledgment information of the terminal device to the core network device through the access network device. After receiving the acknowledgment information, the core network device may start the subsequent paging process.

Optionally, before receiving the first paging information from the access network device, the first terminal device may further send, to the access network device or the core network device, one or more of the following: second indication information, third indication information, and fourth indication information.

Optionally, when no communication connection is established between the first terminal device and the access network device, the first terminal device may send, to the core network device, one or more of the following: second indication information, third indication information, and fourth indication information. The core network device may send, to the access network device, one or more of the following received information: the second indication information, the third indication information, and the fourth indication information.

The second indication information may indicate a type of first paging information that the first terminal device expects to receive, the third indication information may indicate a quantity of bits of first paging information that the first terminal device expects to receive through the first receiver, and the fourth indication information may indicate a quantity of bits of first paging information that the first terminal device expects to receive through the second receiver.

For example, the type of the first paging information that the first terminal device expects to receive may be any one or more of the eight types shown in FIG. 6.

For example, three bits may be used to represent the second indication information. For example, when a value of the second indication information is 000, it may indicate that the type of the first paging information that the first terminal device expects to receive is the type 1 shown in FIG. 6; when a value of the second indication information is 001, it may indicate that the type of the first paging information that the first terminal device expects to receive is the type 2 shown in FIG. 6; ...; and when a value of the second indication information is 111, it may indicate that the type of the first paging information that the first terminal device expects to receive is the type 8 shown in FIG. 6.

When sending the second indication information to the access network device or the core network device, the first terminal device may further indicate, by using the third indication information and the fourth indication information, a quantity of bits carried in all or a part of the first paging information that the first receiver expects to receive and a quantity of bits carried in all or a part of the first paging information that to be received by the second receiver in the type of the first paging information that the first terminal device expects to receive.

Optionally, before sending the first paging information to the first terminal device, the access network device may further send first capability information to the first terminal device; and the first terminal device may send second capability information to the access network device or the core network device based on the first capability information.

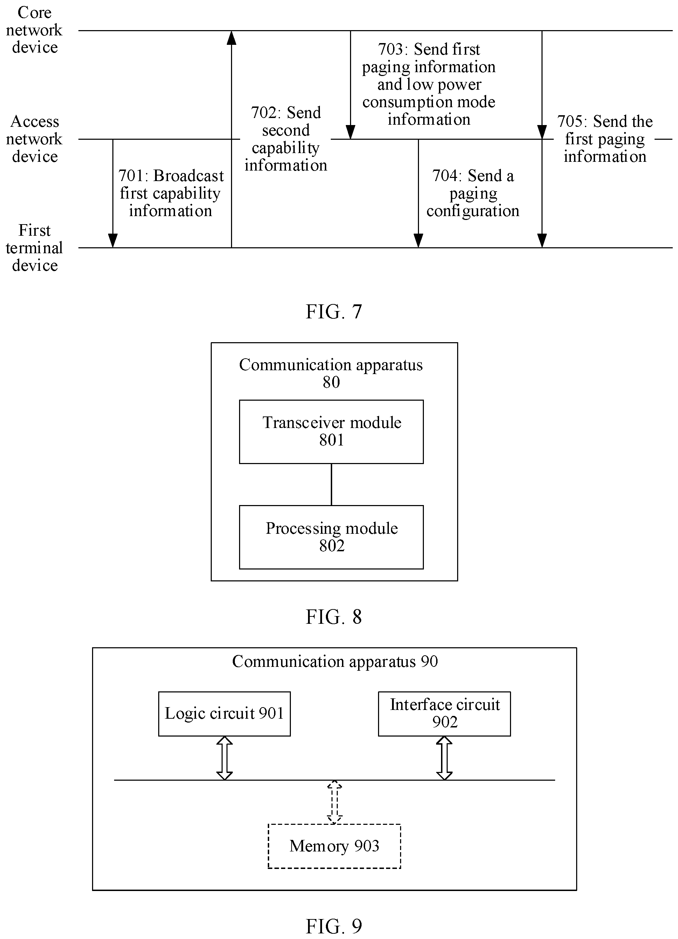

For example, the terminal device is the first terminal device, the access network device may send a paging configuration to the first terminal device according to the following method shown in FIG. 7, and the first terminal device may receive the first paging information based on the paging configuration.

Step 701: The access network device broadcasts the first capability information.

The first capability information may indicate whether the access network device has a low power consumption capability. Alternatively, the first capability information may indicate whether the access network device has an LP-WUS/R capability, or indicate whether the access network device has an LP-WUS/R configuration.

Optionally, the access network device may broadcast the first capability information by using a system message, or may broadcast the first capability information by using another common message. This is not limited.

Step 702: The first terminal device sends the second capability information to the access network device or the core network device.

The second capability information may indicate one or more of the following: whether the terminal device has a low power consumption capability, and whether the terminal device supports entering a low power consumption mode. Alternatively, the second capability information may indicate whether the terminal device supports an LP-WUS/R mode.

Optionally, a terminal device (for example, the first terminal device) having an LP-WUS/R capability may send second capability information to the access network device or the core network device.

Optionally, when a communication connection is established between the first terminal device and the access network device, the first terminal device may send the second capability information to the core network device through the access network device. When no communication connection is established between the first terminal device and the access network device, the first terminal device may send the second capability information to the core network device, and the core network device sends the second capability information to the access network device.

Step 703: The core network device sends the first paging information and low power consumption mode information to the access network device.

The low power consumption mode information may indicate the LP-WUS/R mode.

Step 704: The access network device sends the paging configuration to the first terminal device.

The access network device may include a plurality of candidate paging configurations, and the access network device selects, from the plurality of paging configurations, a paging configuration that can be configured for the first terminal device.

The paging configuration may include configuration information such as a paging cycle.

Step 705: The core network device or the access network device sends the first paging information. Correspondingly, the first terminal device receives the first paging information based on the paging configuration.

The first terminal device may be an LP-WUS/R terminal device.

Optionally, in step 702, when sending the second capability information to the access network device or the core network device, the first terminal device may further send first information (or described as paging requirement information, requirement information, or the like) to the core network device. The core network device sends the first information to the access network device. The access network device may select, based on the first information from the plurality of candidate paging configurations, the paging configuration that can be configured for the first terminal device. Alternatively, the first terminal device may directly send first information to the access network device, and the access network device may further send the first information to the core network device.

The first information may indicate one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

For example, a modulation scheme of the first paging information may be one or more of the following: an on-off keying (on-off keying, OOK) modulation scheme, a frequency shift keying (frequency shift keying, FSK) modulation scheme, carrying paging information in a sequence, an index modulation (index modulation, IM) scheme, an amplitude shift keying (amplitude shift keying, ASK) scheme, a binary phase shift keying (binary phase shift keying, BPSK) scheme, and the like. This is not limited.

For example, a coding scheme of the first paging information may be one or more of the following: a Manchester coding scheme, an NB/MB coding scheme, a differential Manchester coding scheme, a non-return-to-zero coding scheme, a non-return-to-zero inverted coding scheme, a return-to-zero coding scheme, and the like. This is not limited.

The latency requirement of the first terminal device may be an absolute latency threshold, a latency level, a latency range (or described as a range in which the absolute latency threshold is located), or the like. The latency requirement of the first terminal device may also be a latency index. The latency index may have a correspondence with the absolute latency threshold, the latency level, or the latency range.

For example, the latency level and the latency range are used as an example, and as shown in the following Table 2, a correspondence between a latency level and a latency range may be predefined. When reporting the latency requirement, the first terminal device may choose to report the latency level, or may choose to report the latency range. The predefined correspondence may be in a form of a table shown in Table 2, may be in a form of a formula, or may be in a form of a list. This is not limited.

**Table 2**

| Latency level | Latency range |
|---|---|
| 1 | 3 ms to 10 ms |
| 2 | 10 ms to 20 ms |
| 3 | 20 ms to 30 ms |
| 4 | 30 ms to 40 ms |
| ... | ... |
| n | 50 ms to 1s |

In another example, the latency level and the absolute latency threshold are used as an example, and a correspondence between a latency level and an absolute latency threshold may be predefined. For example, if a latency level is 1, a corresponding absolute latency threshold may be 10 ms; and if a latency level is 2, a corresponding absolute latency threshold may be 20 ms.

For the power consumption requirement of the first terminal device, the first terminal device may have a maximum power consumption tolerance value, and the value may be referred to as a power consumption capability of the first terminal device. The power consumption requirement reported by the first terminal device needs to be within the power consumption capability of the first terminal device.

For example, the power consumption requirement reported by the first terminal device may be an absolute power consumption threshold, may be a power consumption level, or may be a power consumption range. For a correspondence between a power consumption level and a power consumption range and a correspondence between a power consumption level and an absolute power consumption threshold, refer to the foregoing related descriptions of the latency level, the latency range, and the absolute latency threshold. In another example, the power consumption requirement reported by the first terminal device may alternatively be a power consumption index, and the power consumption index may have a correspondence with an absolute power consumption threshold, a power consumption level, or a power consumption range.

For the paging cycle expected by the first terminal device, if eDRX is not configured for the first terminal device, the first terminal device may report an expected paging cycle value. For example, the expected paging cycle may be 32 radio frames, 64 radio frames, 128 radio frames, or 256 radio frames. If eDRX is configured for the first terminal device, the first terminal device may report an expected eDRX cycle value. For example, the expected paging cycle may be 256 radio frames, 512 radio frames, or 1024 radio frames.

Optionally, for the expected paging cycle reported by the first terminal device, in addition to the reporting form of an absolute paging cycle value, a paging cycle level or a paging cycle range may be reported. This is not limited. For a specific reporting manner, refer to the foregoing related descriptions of the latency level, the latency range, and the absolute latency threshold. Details are not described.

For the coverage requirement expected by the first terminal device, the coverage requirement may also be described as the sensitivity requirement.

For example, the coverage requirement may represent an absolute coverage threshold, a coverage level, or a coverage range (or described as a range of the absolute coverage threshold). In another example, the coverage requirement may also represent a coverage index, and the coverage index has a correspondence with an absolute coverage threshold, a coverage level, or a coverage range.

For example, a correspondence between a coverage level and a coverage range is predefined, as shown in the following Table 3. The first terminal device may report the coverage level, and the access network device or the core network device may determine, based on the coverage level, the coverage range expected by the first terminal device.

**Table 3**

| Coverage level | Coverage range |
|---|---|
| 1 | -40 dBm to -50 dBm |
| 2 | -50 dBm to -60 dBm |
| 3 | -60 dBm to -70 dBm |
| 4 | -70 dBm to -80 dBm |
| ... | ... |
| n | -110 dBm to -120 dBm |

Optionally, the first terminal device may send the first information to the access network device or the core network device before receiving the first paging information, or may send the first information to the access network device or the core network device after receiving the first paging information. This is not limited.

Optionally, when sending the first paging information to the first terminal device, the core network device or the access network device may determine, based on the first information, the identification information of the terminal device that is carried in the first paging information, and dynamically allocate the first paging information.

The identification information of the terminal device that is carried in the first paging information may occupy a large quantity of bits (where the identification information is described as long identification information or a long ID) or may occupy a small quantity of bits (where the identification information is described as short identification information or a short ID). A quantity of bits occupied by the identification information of the terminal device that is carried in the first paging information may be determined based on the first information.

Optionally, the core network device or the access network device may determine, based on the first information, a total quantity of bits of the identification information of the terminal device that is carried in the first paging information and a type of the identification information of the terminal device.

For example, the core network device or the access network device may determine, based on the modulation scheme, the coding scheme, and the like that are indicated by the first information, the total quantity of bits of the identification information of the terminal device that is carried in the first paging information.

For example, the core network device or the access network device may determine, based on the latency requirement, the power consumption requirement, and the like that are indicated by the first information, the total quantity of bits of the identification information of the terminal device that is carried in the first paging information.

Optionally, for various types of first paging information, a quantity of bits occupied by each component of identification information of a terminal device that is carried in each type of first paging information may have a preset candidate value, and a total quantity of bits of the identification information of the terminal device that is carried in the first paging information may also have a preset candidate value. The core network device or the access network device may determine, from the candidate value of the total quantity of bits based on the modulation scheme, the coding scheme, and the like that are indicated by the first information, the total quantity of bits of the identification information of the terminal device that is carried in the first paging information; determine, from the candidate value of each component based on the latency requirement, the power consumption requirement, and the like that are indicated by the first information, the quantity of bits occupied by each component of the identification information of the terminal device that is carried in the first paging information; and then form the first paging information.

In a possible design, when the first terminal device sends the first information to the core network device or the access network device, a static reporting manner may be used to send the first information to the access network device or the core network device by including the first information in one or more of the following signaling: registration information, non-access stratum (non-access stratum, NAS) information, uplink control information, hybrid automatic repeat request (hybrid automatic repeat request, HARQ) feedback information, and a buffer status report.

The first terminal device may include the first information in the registration information, include the registration information in the NAS information, and transparently transmit the NAS information to the core network device. Alternatively, the first terminal device may include the first information in the uplink control information, and send the uplink control information to the access network device. Alternatively, the first terminal device may include the first information in the HARQ feedback information, and report the HARQ feedback information to the access network device. Alternatively, the first terminal device may include the first information in the buffer status report, and report the buffer status report to the access network device.

In another possible design, when the first terminal device sends the first information to the core network device or the access network device, a dynamic reporting manner may be used. For example, the access network device triggers reporting, or the first terminal device actively reports the first information.

For example, when the access network device needs to optimize a resource configuration, a requirement of the first terminal device needs to be considered. The access network device may dynamically trigger, by including fifth indication information in downlink control information, the first terminal device to report the first information. The fifth indication information may indicate the first terminal device to report the first information.

In another example, when configuration information negotiated by the first terminal device and a network (for example, the access network device) is not friendly to the first terminal device (for example, is not conducive to energy saving of the first terminal device, does not adapt to a service of the first terminal device, does not meet the latency requirement of the first terminal device, or does not meet a coverage requirement of the first terminal device), the first terminal device may actively report the first information.

The first terminal device may include the first information in uplink control information, and send the uplink control information to the access network device. Alternatively, the first terminal device may include the first information in HARQ feedback information, and report the HARQ feedback information to the access network device. Alternatively, the first terminal device may include the first information in a buffer status report, and report the buffer status report to the access network device. Alternatively, the first terminal device may include the first information in registration information, include the registration information in NAS information, and transparently transmit the NAS information to the core network device.

Optionally, when the access network device or the core network device sends first paging information to terminal devices in cells, different cells may correspond to different types of first paging information, and a same cell may also correspond to different types of first paging information at different moments.

Optionally, in the foregoing embodiment, when the first terminal device is in an RRC idle state, the first terminal device may report related information (for example, the second indication information, the third indication information, the fourth indication information, the second capability information, and the first information) to the core network device (for example, the mobility management network element), the core network device sends the received related information to the access network device, and the core network device or the access network device sends the first paging information to the first terminal device based on the related information.

When the first terminal device is in an RRC connected state, the foregoing embodiment is also applicable to the following procedure: The first terminal device reports the related information to the access network device, the access network device sends the received related information to the core network device, the core network device sends related information (for example, the first indication information and the first paging information) to the access network device base station, and the access network device sends information such as the paging configuration or the first paging information to the first terminal device.

When the first terminal device reports the related information to the core network device or the access network device, a static reporting manner may be used, or a dynamic reporting manner may be used. For example, the access network device triggers reporting, or the first terminal device actively reports the related information.

Based on the methods shown in FIG. 5 to FIG. 7, because the quantity of bits of the identification information of the terminal device is less than 48, signaling overheads and power consumption of the terminal device can be reduced while user security is ensured. This is conducive to energy saving of the terminal device.

In addition, information exchange between the core network device and the first terminal device enables the core network device to have more reference information, to allocate a more appropriate length and type of the identification information of the terminal device that is carried in the first paging information. In the foregoing embodiment, the core network device or the access network device may further dynamically adjust the length and the type of the identification information of the terminal device in the first paging information, to further improve a network capacity. For the first terminal device, the paging requirement information of the first terminal device is reported to the core network device or the access network device, so that the first terminal device can exchange more information with the core network device or the access network device, and finally can obtain better configuration information to a greater extent.

In addition, in the paging mechanism in this application, when reporting the paging requirement information to the core network device, the first terminal device may not only report the expected paging cycle, but also report information such as the expected type of the first paging information, the modulation scheme, the coding scheme, the latency requirement, the power consumption requirement, the coverage requirement, and the sensitivity requirement, so that the network and the first terminal device can reach a consensus on more paging configuration parameters. This is conducive to energy saving of the terminal device.

Optionally, in the foregoing embodiment, before receiving the first paging information from the access network device, the first terminal device may further receive sixth indication information from the access network device.

The sixth indication information may indicate a cycle in which the first terminal device monitors the first paging information, and the cycle may be determined based on one or more of the following information associated with the first terminal device: a paging cycle, a terminal device group, a service type, a communication frequency, communication time, the latency requirement, the power consumption requirement, cell load, network load, a modulation scheme, a coding scheme, a coverage requirement, and a sensitivity requirement.

The access network device may configure, according to different rules, the cycle in which the first terminal device monitors the first paging information. Similarly, the access network device may also configure, according to the same rules, a cycle in which the first terminal device monitors the second paging information.

For example, the cycle in which the first terminal device monitors the first paging information is determined based on the communication frequency and the latency requirement, and the access network device may determine, according to the following configuration rule 1, the cycle in which the first terminal device monitors the first paging information.

Configuration rule 1: A cycle of the first paging information is configured based on a terminal device. In other words, different terminal devices may have different configurations of a cycle length of the first paging information.

For example, it is assumed that a terminal device 1 is a terminal device with a high communication frequency (or described as a terminal device with high activity), and has a high latency requirement. In this case, the access network device may allocate a small cycle of the first paging information to the terminal device 1. For example, the allocated cycle of the first paging information may be 128 radio frames or 256 radio frames.

For another example, it is assumed that a terminal device 2 is a terminal device with a low communication frequency (or described as a terminal device with low activity), and has a low latency requirement. In this case, the access network device may allocate a large cycle of the first paging information to the terminal device 2. For example, the allocated cycle of the first paging information may be 32 radio frames or 64 radio frames.

In another example, the cycle in which the first terminal device monitors the first paging information is determined based on the terminal device group, and the access network device may determine, according to the following configuration rule 2, the cycle in which the first terminal device monitors the first paging information.

Configuration rule 2: The access network device may group terminal devices, and configure a cycle of the first paging information based on a terminal device group. Compared with the configuration rule 1, a configuration granularity may be larger, and each terminal device may not have a different configuration, but one or more terminal devices have a same configuration of the cycle of the first paging information.

A manner of grouping different terminal devices may be as follows: The access network device groups, based on information from the core network device, terminal devices that have a same expected cycle level of the first paging information into one terminal device group, and a same cycle for monitoring the first paging information is configured for all terminal devices in the terminal device group. In addition to being grouped based on expected cycles of the terminal devices for the first paging information, the terminal devices may also be grouped based on different service types of the terminal devices, habits of using the terminal devices by users, frequencies of using the terminal devices by the users, or the like. This is not limited.

Optionally, when the access network device configures, for the first terminal device, the cycle in which the first terminal device monitors the first paging information, there may be different configuration indications. For example, the access network device may indicate the sixth indication information to the terminal device by including the sixth indication information in a system message; indicate the sixth indication information to the terminal device by including the sixth indication information in downlink control information; or indicate the sixth indication information to the terminal device by including the sixth indication information in a downlink data channel, in other words, the sixth indication information may be transmitted along with data.

Optionally, the first terminal device may further receive eighth indication information from the access network device.

The eighth indication information may indicate a time-frequency resource allocated by the access network device to the first terminal device, and the time-frequency resource may be determined based on one or more of the following information associated with the first terminal device: the paging cycle, the terminal device group, the service type, the communication frequency, the communication time, the latency requirement, the power consumption requirement, the cell load, the network load, the modulation scheme, the coding scheme, the coverage requirement, and the sensitivity requirement.

When allocating the time-frequency resource to the first terminal device, the access network device may refer to information (for example, the first information) reported by the first terminal device.

For example, the first information reported by the first terminal device to the core network device includes the latency requirement of the first terminal device. If the first terminal device has a high latency requirement (or described as a strict latency requirement), when allocating the time-frequency resource, the access network device may increase a priority of the first terminal device, for example, may allocate more time-frequency resources to the first terminal device, so that the first terminal device can quickly complete information transmission.

In another example, the first information reported by the first terminal device to the core network device includes the coverage requirement or the sensitivity requirement of the first terminal device. If the first terminal device has a high coverage or sensitivity requirement (or described as a strict coverage or sensitivity requirement), when allocating the time-frequency resource, the access network device may increase a priority of the first terminal device, for example, may allocate more time-frequency resources to the first terminal device, so that the first terminal device can quickly complete information transmission.

After obtaining the first information of the first terminal device, the access network device may configure the time-frequency resource with reference to the first information reported by the first terminal device. The first information reported by the first terminal device may be reported to the core network device, and the core network device forwards the first information to the access network device. Alternatively, the first information reported by the first terminal device may be reported to the access network device. If the first information reported by the first terminal device is reported to the access network device, the access network device may further send the first information to the core network device, and then the core network device sends the first information to the access network device. Alternatively, the access network device may directly perform subsequent time-frequency resource configuration or information transmission with the first terminal device based on the first information reported by the first terminal device. This is not limited.

Optionally, before receiving the first paging information from the access network device, the first terminal device may further receive seventh indication information from the access network device.

The seventh indication information may indicate a determining rule of the cycle in which the first terminal device monitors the first paging information.

When configuring, for the first terminal device, the cycle in which the first terminal device monitors the first paging information, the access network device may adaptively adjust the cycle in which the first terminal device monitors the first paging information, so that the first terminal device obtains a better configuration of the cycle of the first paging information, and this further achieves energy saving effect.

For example, if eDRX is not configured for the first terminal device, the access network device may indicate, to the first terminal device by using the seventh indication information, any one or more of the following three possible determining rules as the determining rule of the cycle in which the first terminal device monitors the first paging information.

Determining rule 1: The determining rule includes: if a DRX cycle or paging cycle that is specific to the terminal device is configured at a higher layer, determining, based on a smaller value between the DRX cycle or paging cycle and a preset cycle, the cycle in which the first terminal device monitors the first paging information.

That a DRX cycle or paging cycle that is specific to the terminal device is configured at a higher layer may also be understood as that the first terminal device reports an expected DRX cycle or paging cycle. The higher layer may represent the access network device, and the preset cycle may be a default value.

The default value may be a DRX cycle or paging cycle configured by the access network device through RRC signaling.

Determining rule 2: The determining rule includes: if a DRX cycle or paging cycle that is specific to the terminal device is configured at a higher layer, determining, based on a larger value between the DRX cycle or paging cycle and a preset cycle, the cycle in which the first terminal device monitors the first paging information.

In some application scenarios, if a default value is set to be excessively small, when configuring a DRX cycle or paging cycle, the access network device may not be able to refer to an expected DRX cycle or paging cycle reported by the first terminal device, and the DRX cycle or paging cycle finally configured by the access network device is not necessarily a perfect configuration for the first terminal device. Therefore, based on the foregoing consideration, when configuring the DRX cycle or paging cycle, the access network device may further refer to the determining rule 2, and determine, based on the larger value between the DRX cycle or paging cycle and the preset cycle, the cycle in which the first terminal device monitors the first paging information.

Determining rule 3: The determining rule includes: if no DRX cycle or paging cycle that is specific to the terminal device is configured at a higher layer, determining, based on a preset cycle, the cycle in which the first terminal device monitors the first paging information.

In the RRC idle state, if no DRX cycle or paging cycle that is specific to the terminal device is configured at the higher layer, the preset cycle whose value is a default value may be used as the cycle in which the first terminal device monitors the first paging information.

For example, when notifying, by using the seventh indication information, the first terminal device of the determining rule of the cycle in which the first terminal device monitors the first paging information, the access network device may dynamically indicate the foregoing three determining rules by using two bits. For example, a bit status 11 may indicate that the access network device determines, according to the determining rule 1, the cycle in which the first terminal device monitors the first paging information; a bit status 10 may indicate that the access network device determines, according to the determining rule 2, the cycle in which the first terminal device monitors the first paging information; and a bit status 01 may indicate that the access network device determines, according to the determining rule 3, the cycle in which the first terminal device monitors the first paging information.

In another example, when notifying, by using the seventh indication information, the first terminal device of the determining rule of the cycle in which the first terminal device monitors the first paging information, the access network device may dynamically indicate, by using one bit, whether the DRX cycle or paging cycle that is specific to the terminal device is configured at the higher layer. For example, a bit status 1 may indicate that the DRX cycle or paging cycle that is specific to the terminal device is configured at the higher layer, and a bit status 0 may indicate that no DRX cycle or paging cycle that is specific to the terminal device is configured at the higher layer. Based on the 1-bit indication, the access network device may further use another one bit to indicate a manner of determining the cycle in which the first terminal device monitors the first paging information. For example, a bit status of the one bit is 1, and if a bit status of the another one bit is 1, it indicates that the cycle in which the first terminal device monitors the first paging information is determined based on the smaller value between the DRX cycle or paging cycle that is specific to the terminal device and the preset cycle. Alternatively, a bit status of the one bit is 1, and if a bit status of the another one bit is 0, it indicates that the cycle in which the first terminal device monitors the first paging information is determined based on the larger value between the DRX cycle or paging cycle that is specific to the terminal device and the preset cycle.

Optionally, the cycle in which the first terminal device monitors the first paging information may alternatively be predefined. For example, if eDRX is not configured, but the DRX cycle or paging cycle that is specific to the terminal device is configured at the higher layer, in other words, the terminal device reports the expected DRX cycle or paging cycle, the cycle in which the first terminal device monitors the first paging information is determined based on the larger value between the DRX cycle or paging cycle that is specific to the terminal device and the preset cycle.

In the foregoing embodiment, the access network device may configure the cycle of the first paging information based on a single terminal device or a terminal device group. Through adaptive configuration manner adjustment, the terminal device can obtain the better configuration of the cycle of the first paging information, to achieve energy saving effect and performance improvement effect. Similarly, for the access network device, time-frequency resource allocation may be adjusted based on different configuration information, to achieve capacity improvement effect. In addition, according to the new provided determining rules of the cycle in which the terminal device monitors the first paging information, when the access network device configures the cycle of the first paging information, the expected paging cycle reported by the terminal device can be more easily considered by the access network device. This is conducive to energy saving of the terminal device, or is conducive to meeting different latency requirements, power consumption requirements, coverage requirements, sensitivity requirements, or the like of the terminal device, and is conducive to network capacity improvement.

It should be noted that the methods provided in embodiments of this application may be implemented separately, or may be implemented in combination. This is not limited.

It may be understood that in embodiments of this application, an execution body may perform some or all of the steps in embodiments of this application. These steps or operations are merely examples. In embodiments of this application, other operations or variations of the operations may be further performed. In addition, the steps may be performed in a sequence different from a sequence presented in embodiments of this application, and not all operations in embodiments of this application may be performed.

The foregoing mainly describes the solutions provided in embodiments of this application from a perspective of interaction between devices. It may be understood that to implement the foregoing functions, the devices include hardware structures and/or software modules corresponding to the functions. A person skilled in the art should easily be aware that, in combination with algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, each device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

When each functional module is obtained through division based on each corresponding function, FIG. 8 shows a communication apparatus 80. The communication apparatus 80 may perform actions performed by the first terminal device in FIG. 5 to FIG. 7, perform actions performed by the access network device in FIG. 5 to FIG. 7, or perform actions performed by the core network device in FIG. 5 to FIG. 7.

The communication apparatus 80 may include a transceiver module 801 and a processing module 802. For example, the communication apparatus 80 may be a communication device, or may be a chip used in the communication device, or another combined device or part that has a function of the communication apparatus. When the communication apparatus 80 is the communication device, the transceiver module 801 may be a transceiver, where the transceiver may include an antenna, a radio frequency circuit, and the like; and the processing module 802 may be a processor (or a processing circuit), for example, a baseband processor, where the baseband processor may include one or more CPUs. When the communication apparatus 80 is the part having the function of the communication apparatus, the transceiver module 801 may be a radio frequency unit; and the processing module 802 may be a processor (or a processing circuit), for example, a baseband processor. When the communication apparatus 80 is a chip system, the transceiver module 801 may be an input/output interface of a chip (for example, a baseband chip); and the processing module 802 may be a processor (or a processing circuit) of the chip system, and may include one or more central processing units. It should be understood that the transceiver module 801 in this embodiment of this application may be implemented by a transceiver or a transceiver-related circuit component; and the processing module 802 may be implemented by a processor or a processor-related circuit component (or referred to as a processing circuit).

For example, the transceiver module 801 may be configured to perform all receiving and sending operations performed by the communication apparatus in embodiments shown in FIG. 5 to FIG. 7, and/or configured to support another process of the technology described in this specification; and the processing module 802 may be configured to perform all operations performed by the communication apparatus in the embodiments shown in FIG. 5 to FIG. 7 except the receiving and sending operations, and/or configured to support another process of the technology described in this specification.

In another possible implementation, the transceiver module 801 in FIG. 8 may be replaced with a transceiver, and a function of the transceiver module 801 may be integrated into the transceiver; and the processing module 802 may be replaced with a processor, and a function of the processing module 802 may be integrated into the processor. Further, the communication apparatus 80 shown in FIG. 8 may further include a memory.

Alternatively, when the processing module 802 is replaced with the processor, and the transceiver module 801 is replaced with the transceiver, the communication apparatus 80 in this embodiment of this application may be a communication apparatus 90 shown in FIG. 9. The processor may be a logic circuit 901, and the transceiver may be an interface circuit 902. Further, the communication apparatus 90 shown in FIG. 9 may include a memory 903.

An embodiment of this application further provides a computer program product. When the computer program product is executed by a computer, functions in any one of the foregoing method embodiments may be implemented.

An embodiment of this application further provides a computer program. When the computer program is executed by a computer, functions in any one of the foregoing method embodiments may be implemented.

An embodiment of this application further provides a computer-readable storage medium. All or some of the procedures in the foregoing method embodiments may be completed by a computer program instructing related hardware. The program may be stored in the computer-readable storage medium. When the program is executed, the procedures in the foregoing method embodiments may be included. The computer-readable storage medium may be an internal storage unit of the terminal (including a data transmit end and/or a data receive end) in any one of the foregoing embodiments, for example, a hard disk or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that is configured on the terminal. Further, the computer-readable storage medium may alternatively include both the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, terms such as "first" and "second" are intended to distinguish between different objects but do not indicate a particular order. "First" and "second" are merely used for the purpose of description, and shall not be understood as an indication or implication of relative importance or an implicit indication of a quantity of indicated technical features. Therefore, a feature limited by "first" or "second" may explicitly or implicitly include one or more such features. In the descriptions of embodiments, unless otherwise specified, "a plurality of" means two or more than two.

In addition, terms "include", "have", and any other variants thereof are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

It should be understood that, in this application, "at least one (item)" means one or more. "A plurality of" means two or more than two. "At least two (items)" means two, three, or more. "And/or" describes an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one of a, b, or c, or at least one of a, b, and c may represent: a, b, c, "a and b", "a and c", "b and c", or "a, b, and c", where a, b, and c may be singular, or may be plural. Both "when" and "if" mean that corresponding processing is performed in an objective case, but are not intended to limit time. In addition, the terms do not necessarily mean that a determining action is required during implementation, and do not mean any other limitation either.

In embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a related concept in a specific manner for ease of understanding.

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above.

In several embodiments provided in this application, it should be understood that the disclosed apparatuses and methods may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may be one or more physical units, that is, may be located in one place, or may be distributed to different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially or all or some of the technical solutions may be implemented in a form of a software product. The software product is stored in a storage medium, and includes several instructions for instructing a device (which may be a single-chip microcomputer, a chip, or the like) or a processor (processor) to perform all or some of the steps of the methods in embodiments of this application. The foregoing storage medium includes any medium that can store program code, for example, a USB flash drive, a removable hard disk, a ROM, a RAM, a magnetic disk, or an optical disc.

## Claims

1. A communication method, comprising:
receiving first paging information from an access network device, wherein the first paging information comprises identification information of one or more terminal devices, and a quantity of bits of identification information of each terminal device in the one or more terminal devices is less than 48; and
determining, based on the first paging information, whether the identification information of the one or more terminal devices comprises identification information of a first terminal device.

2. The method according to claim 1, wherein
the identification information of each terminal device is less than or equal to 32 bits.

3. The method according to claim 1 or 2, wherein
the identification information of the terminal device comprises first identification information;
the identification information of the terminal device comprises second identification information and third identification information;
the identification information of the terminal device comprises second identification information, fourth identification information, and fifth identification information; or
the identification information of the terminal device comprises second identification information and first identification information, wherein
the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group comprises one or more terminal device subgroups.

4. The method according to claim 3, wherein the first terminal device comprises a first receiver and a second receiver, and the receiving first paging information from an access network device comprises:
receiving the first paging information through the first receiver; or
receiving a first part of bit information of the first paging information through the first receiver, and receiving a second part of bit information of the first paging information through the second receiver.

5. The method according to claim 4, wherein
power consumption of the first receiver is less than power consumption of the second receiver.

6. The method according to claim 4 or 5, wherein the receiving the first paging information through the first receiver comprises:
if the identification information of the terminal device comprises the first identification information, receiving the first identification information in the first paging information through the first receiver;
if the identification information of the terminal device comprises the second identification information and the third identification information, receiving the second identification information in the first paging information through the first receiver; and if the second identification information is the same as second identification information in the identification information of the first terminal device, receiving the third identification information in the first paging information through the first receiver;
if the identification information of the terminal device comprises the second identification information, the fourth identification information, and the fifth identification information, receiving the second identification information in the first paging information through the first receiver; if the second identification information is the same as second identification information in the identification information of the first terminal device, receiving the fourth identification information in the first paging information through the first receiver; and if the fourth identification information is the same as fourth identification information in the identification information of the first terminal device, receiving the fifth identification information in the first paging information through the first receiver; or
if the identification information of the terminal device comprises the second identification information and the first identification information, receiving the second identification information in the first paging information through the first receiver; and if the second identification information is the same as second identification information in the identification information of the first terminal device, receiving the first identification information in the first paging information through the first receiver.

7. The method according to any one of claims 4 to 6, wherein if the first paging information is received through the first receiver, the method further comprises:
if the first paging information received through the first receiver comprises the identification information of the first terminal device, waking up the second receiver to perform network access.

8. The method according to claim 4 or 5, wherein the receiving a first part of bit information of the first paging information through the first receiver, and receiving a second part of bit information of the first paging information through the second receiver comprises:
if the first part of bit information received through the first receiver is the same as a first part of bit information of the identification information of the first terminal device, waking up the second receiver to receive the second part of bit information of the first paging information.

9. The method according to claim 4, 5, or 8, wherein
the first part of bit information is a first part of bit information of the first identification information, and the second part of bit information is a second part of bit information of the first identification information;
the first part of bit information comprises the second identification information, and the second part of bit information comprises the first identification information;
the first part of bit information comprises the second identification information, and the second part of bit information comprises the third identification information; or
the first part of bit information comprises the second identification information and a first part of the third identification information, and the second part of bit information comprises a second part of the third identification information.

10. The method according to any one of claims 1 to 9, wherein the receiving first paging information from an access network device comprises:
receiving the first paging information from the access network device based on a candidate length of the first paging information, wherein
the candidate length is predefined; or first indication information is received from the access network device, and the first indication information indicates the candidate length.

11. The method according to any one of claims 1 to 10, wherein
the identification information of the first terminal device is predefined; or
the identification information of the first terminal device is received from the access network device or a core network device.

12. The method according to any one of claims 1 to 11, wherein before the receiving first paging information from an access network device, the method further comprises:
sending, to the access network device or the core network device, one or more of the following: second indication information, third indication information, and fourth indication information, wherein
the second indication information indicates a type of first paging information that the first terminal device expects to receive, the third indication information indicates a quantity of bits of first paging information that the first terminal device expects to receive through the first receiver, and the fourth indication information indicates a quantity of bits of first paging information that the first terminal device expects to receive through the second receiver.

13. The method according to any one of claims 1 to 12, wherein before the receiving first paging information from an access network device, the method further comprises:
receiving first capability information from the access network device, wherein the first capability information indicates whether the access network device has a low power consumption capability; and
sending second capability information to the access network device or the core network device based on the first capability information, wherein the second capability information indicates one or more of the following: whether the terminal device has a low power consumption capability and whether the terminal device supports entering a low power consumption mode.

14. The method according to any one of claims 1 to 13, wherein the method further comprises:
sending first information to the access network device or the core network device, wherein the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

15. The method according to claim 14, wherein the sending first information to the access network device or the core network device comprises:
sending the first information to the access network device or the core network device by comprising the first information in one or more of the following signaling: registration information, non-access stratum NAS information, uplink control information, hybrid automatic repeat request HARQ feedback information, and a buffer status report;
receiving fifth indication information from the access network device, and sending the first information to the access network device or the core network device based on the fifth indication information, wherein the fifth indication information indicates the first terminal device to report the first information; or
if configuration information sent by the access network device to the first terminal device does not meet a configuration requirement of the first terminal device, sending the first information to the access network device or the core network device.

16. The method according to any one of claims 1 to 15, wherein before the receiving first paging information from an access network device, the method further comprises:
receiving sixth indication information from the access network device, wherein the sixth indication information indicates a cycle in which the first terminal device monitors the first paging information, and the cycle is determined based on one or more of the following information associated with the first terminal device: a paging cycle, a terminal device group, a service type, a communication frequency, communication time, the latency requirement, the power consumption requirement, cell load, network load, a modulation scheme, a coding scheme, a coverage requirement, and a sensitivity requirement.

17. The method according to any one of claims 1 to 16, wherein before the receiving first paging information from an access network device, the method further comprises:
receiving seventh indication information from the access network device, wherein the seventh indication information indicates a determining rule of the cycle in which the first terminal device monitors the first paging information; and the determining rule comprises: if a discontinuous reception DRX cycle or paging cycle that is specific to the terminal device is configured at a higher layer, determining, based on a smaller value between the DRX cycle or paging cycle and a preset cycle, the cycle in which the first terminal device monitors the first paging information; or the determining rule comprises: if a DRX cycle or paging cycle that is specific to the terminal device is configured at a higher layer, determining, based on a larger value between the DRX cycle or paging cycle and a preset cycle, the cycle in which the first terminal device monitors the first paging information; or the determining rule comprises: if no DRX cycle or paging cycle that is specific to the terminal device is configured at a higher layer, determining, based on a preset cycle, the cycle in which the first terminal device monitors the first paging information.

18. The method according to any one of claims 1 to 17, wherein the method further comprises:
receiving eighth indication information from the access network device, wherein the eighth indication information indicates a time-frequency resource allocated by the access network device to the first terminal device, and the time-frequency resource is determined based on one or more of the following information associated with the first terminal device: the paging cycle, the terminal device group, the service type, the communication frequency, the communication time, the latency requirement, the power consumption requirement, the cell load, the network load, the modulation scheme, the coding scheme, the coverage requirement, and the sensitivity requirement.

19. A communication method, comprising:
determining first paging information, wherein the first paging information comprises identification information of one or more terminal devices, and a quantity of bits of identification information of each terminal device in the one or more terminal devices is less than 48; and
sending the first paging information to a first terminal device.

20. The method according to claim 19, wherein the determining first paging information comprises:
receiving the first paging information from a core network device.

21. The method according to claim 19 or 20, wherein
the identification information of the terminal device comprises first identification information;
the identification information of the terminal device comprises second identification information and third identification information;
the identification information of the terminal device comprises second identification information, fourth identification information, and fifth identification information; or
the identification information of the terminal device comprises second identification information and first identification information, wherein
the first identification information indicates identification information of a mobility management network element associated with the terminal device and identification information of the terminal device in the mobility management network element, the second identification information indicates identification information of a terminal device group associated with the terminal device, the third identification information indicates identification information of the terminal device in the terminal device group, the fourth identification information indicates identification information of a terminal device subgroup associated with the terminal device, the fifth identification information indicates identification information of the terminal device in the terminal device subgroup, and the terminal device group comprises one or more terminal device subgroups.

22. The method according to any one of claims 19 to 21, wherein
the identification information of each terminal device is less than or equal to 32 bits.

23. The method according to any one of claims 19 to 22, wherein before the sending the first paging information to a first terminal device, the method further comprises:
sending first indication information to the first terminal device; or
receiving first indication information from the core network device, and sending the first indication information to the first terminal device, wherein
the first indication information indicates a candidate length of the first paging information.

24. The method according to any one of claims 19 to 23, wherein
identification information of the first terminal device is sent to the first terminal device; or
identification information of the first terminal device is received from the core network device, and the identification information of the first terminal device is sent to the first terminal device.

25. The method according to any one of claims 19 to 24, wherein before the sending the first paging information to a first terminal device, the method further comprises:
receiving, from the first terminal device, one or more of the following: second indication information, third indication information, and fourth indication information, and sending, to the core network device, one or more of the following: the second indication information, the third indication information, and the fourth indication information; or
receiving, from the core network device, one or more of the following: the second indication information, the third indication information, and the fourth indication information, wherein
the second indication information indicates a type of first paging information that the first terminal device expects to receive, the third indication information indicates a quantity of bits of first paging information that the first terminal device expects to receive through a first receiver, and the fourth indication information indicates a quantity of bits of first paging information that the first terminal device expects to receive through a second receiver.

26. The method according to any one of claims 19 to 25, wherein before the sending the first paging information to a first terminal device, the method further comprises:
sending first capability information, wherein the first capability information indicates whether the access network device has a low power consumption capability;
receiving second capability information from the first terminal device, wherein the second capability information indicates one or more of the following: whether the terminal device has a low power consumption capability and whether the terminal device supports entering a low power consumption mode; and
sending the second capability information to the core network device.

27. The method according to any one of claims 19 to 26, wherein the method further comprises:
receiving first information from the first terminal device, and sending the first information to the core network device; or
receiving first information from the core network device, wherein
the first information indicates one or more of the following: a modulation scheme expected by the first terminal device for the first paging information, a coding scheme expected by the first terminal device for the first paging information, a latency requirement of the first terminal device, a power consumption requirement of the first terminal device, a paging cycle expected by the first terminal device, a coverage requirement expected by the first terminal device, and a sensitivity requirement expected by the first terminal device.

28. The method according to claim 27, wherein the receiving first information from the first terminal device comprises:
receiving the first information from the first terminal device through one or more of the following signaling: registration information, non-access stratum NAS information, uplink control information, hybrid automatic repeat request HARQ feedback information, and a buffer status report;
sending fifth indication information to the first terminal device, and receiving the first information from the first terminal device, wherein the fifth indication information indicates the first terminal device to report the first information; or
if configuration information sent to the first terminal device does not meet a configuration requirement of the first terminal device, receiving the first information from the first terminal device.

29. The method according to any one of claims 19 to 28, wherein before the sending the first paging information to a first terminal device, the method further comprises:
sending sixth indication information to the first terminal device, wherein the sixth indication information indicates a cycle in which the first terminal device monitors the first paging information, and the cycle is determined based on one or more of the following information associated with the first terminal device: a paging cycle, a terminal device group, a service type, a communication frequency, communication time, the latency requirement, the power consumption requirement, cell load, network load, a modulation scheme, a coding scheme, a coverage requirement, and a sensitivity requirement.

30. The method according to any one of claims 19 to 29, wherein before the sending the first paging information to a first terminal device, the method further comprises:
sending seventh indication information to the first terminal device, wherein the seventh indication information indicates a determining rule of the cycle in which the first terminal device monitors the first paging information; and the determining rule comprises: if a discontinuous reception DRX cycle or paging cycle that is specific to the terminal device is configured at a higher layer, determining, based on a smaller value between the DRX cycle or paging cycle and a preset cycle, the cycle in which the first terminal device monitors the first paging information; or the determining rule comprises: if a DRX cycle or paging cycle that is specific to the terminal device is configured at a higher layer, determining, based on a larger value between the DRX cycle or paging cycle and a preset cycle, the cycle in which the first terminal device monitors the first paging information; or the determining rule comprises: if no DRX cycle or paging cycle that is specific to the terminal device is configured at a higher layer, determining, based on a preset cycle, the cycle in which the first terminal device monitors the first paging information.

31. The method according to any one of claims 19 to 30, wherein the method further comprises:
sending eighth indication information to the first terminal device, wherein the eighth indication information indicates a time-frequency resource allocated to the first terminal device, and the time-frequency resource is determined based on one or more of the following information associated with the first terminal device: the paging cycle, the terminal device group, the service type, the communication frequency, the communication time, the latency requirement, the power consumption requirement, the cell load, the network load, the modulation scheme, the coding scheme, the coverage requirement, and the sensitivity requirement.

32. A communication method, comprising:
determining first paging information, wherein the first paging information comprises identification information of one or more terminal devices, and a quantity of bits of identification information of each terminal device in the one or more terminal devices is less than 48; and
sending the first paging information to a first terminal device through an access network device.

33. A communication apparatus, wherein the communication apparatus comprises a processor; and the processor is configured to run a computer program or instructions, to enable the communication apparatus to perform the communication method according to any one of claims 1 to 18, the communication method according to any one of claims 19 to 31, or the communication method according to claim 32.

34. A computer-readable storage medium, wherein the computer-readable storage medium stores computer instructions or a program; and when the computer instructions or the program is run on a computer, the communication method according to any one of claims 1 to 18 is performed, the communication method according to any one of claims 19 to 31 is performed, or the communication method according to claim 32 is performed.

35. A computer program product, wherein the computer program product comprises computer instructions; and when all or a part of the computer instructions are run on a computer, the communication method according to any one of claims 1 to 18 is performed, the communication method according to any one of claims 19 to 31 is performed, or the communication method according to claim 32 is performed.
